# EUROPÄISCHE PATENTSCHRIFT

(11) **EP 4 073 983 B1**
(45) Veröffentlichungstag und Bekanntmachung des Hinweises auf die Patenterteilung: **12.04.2023**
(21) Anmeldenummer: 21700416.7
(22) Anmeldetag: 12.01.2021
(51) Int. Cl.: H04L 12/417, G05B 19/05, H04L 12/40

(54) **VERFAHREN ZUR DATENKOMMUNIKATION ZWISCHEN TEILNEHMERN EINES AUTOMATISIERUNGSSYSTEMS**
METHOD FOR DATA COMMUNICATION BETWEEN PARTICIPANTS OF AN AUTOMATION SYSTEM
PROCÉDÉ DE COMMUNICATION DE DONNÉES ENTRE DES PARTICIPANTS D'UN SYSTÈME D'AUTOMATISATION

(30) Priorität: 16.01.2020 DE 102020100987
(43) Veröffentlichungstag der Anmeldung: 19.10.2022
(73) Patentinhaber: Beckhoff Automation GmbH, 33415 Verl (DE)
(72) Erfinder: BÜTTNER, Holger, 12205 Berlin (DE); BECKHOFF, Hans, 33415 Verl (DE)
(74) Vertreter: Patentanwaltskanzlei WILHELM & BECK
(86) Internationale Anmeldenummer: PCT/EP2021/050467
(87) Internationale Veröffentlichungsnummer: WO 2021/144252

(56) Entgegenhaltungen:
- EP-A1- 1 748 338
- EP-A1- 2 028 797
- DE-A1-102005 053 103

## Beschreibung

Die vorliegende Erfindung betrifft ein Verfahren zur Datenkommunikation in einem Automatisierungssystem, insbesondere zwischen einem aktiven Teilnehmer und wenigstens zwei passiven Teilnehmern.

Diese Patentanmeldung beansprucht die Priorität der deutschen Patentanmeldung DE 10 2020 100 987.9

Automatisierungsnetzwerke von Automatisierungssystemen werden häufig als sogenannte Feldbussysteme betrieben. Feldbussysteme sind industrielle Bussysteme, die eine echtzeitfähige Steuerung der Maschinen oder Anlagen des Automatisierungsnetzwerks ermöglichen. In der Regel werden die Maschinen oder Anlagen des Automatisierungsnetzwerks mithilfe von speicherprogrammierbaren Steuerungen (SPS) gesteuert. Zur Kommunikation der Feldgeräte, also beispielsweise Sensoren und Aktoren der Maschinen oder Anlagen des Automatisierungsnetzwerks mit der SPS, nutzt die SPS das Feldbussystem.

Üblich für Feldbussysteme ist die Einteilung in aktive und passive Teilnehmer des Bussystems, wobei aktive Teilnehmer sich dadurch auszeichnen, dass sie Datenkommunikationen zwischen den Teilnehmern durch Aussenden entsprechender Nachrichten starten können, während passive Teilnehmer für gewöhnlich auf das Antworten auf vom aktiven Teilnehmer ausgesendete Nachrichten beschränkt sind. Der Austausch von Daten kann in solchen Feldbussystemen mithilfe von Datentelegrammen realisiert sein, die in Abhängigkeit des verwendeten Feldbusprotokolls neben den zu übermittelnden Nutzdaten eine Reihe weiterer Informationen, wie Adressierungen der an der Datenkommunikation mitwirkenden Teilnehmern, umfassen.

In komplexen Feldbussystemen, wie beispielsweise EtherCAT, lässt sich eine Mehrzahl von passiven Teilnehmern durch ein gemeinsames Datentelegramm ansprechen und in einem Durchlaufverfahren verarbeiten, bei dem das Telegramm von einem Teilnehmer zum nächsten weitergeleitet und von mehreren Teilnehmern bearbeitet werden kann. Dies ermöglicht eine besonders schnelle Kommunikation, da eine geringere Anzahl von Datentelegrammen zu übertragen sind.

Für viele Anwendungen innerhalb eines Automatisierungssystems sind derartige Feldbussysteme jedoch komplexer gestaltet, als dies für die Anwendung notwendig wäre. Beispielsweise für die Ansteuerung einfacher Sensoren sind bekannte Feldbusprotokolle zu aufwendig und zu komplex und bieten Möglichkeiten, die für eine Übertragung von technisch wenig komplexen Daten technisch einfacher Sensoren nicht benötigt werden. Die hohe Effektivität und Performance der komplexen Feldbussysteme haben für gewöhnlich den Preis eines hohen Protokoll-Overheads wie auch komplexer und kostenaufwendiger Verkabelungen und Hardware-Konfigurationen. Für die oben angesprochenen wenig komplexen Anwendungen stellen diese Feldbussysteme daher keine effizienten Lösungen dar.

Feldbusse, die nicht auf einer Punkt-zu-Punkt-Verbindung basieren, wie z.B. PROFIBUS oder CAN, im Folgenden auch Feldbusse mit Party-Line-Konfiguration genannt, haben den Vorteil, dass über gemeinsame Nachrichten eine Mehrzahl verschiedener Teilnehmer angesprochen werden können. Somit können beispielsweise Eingangsdaten von der Steuerung an eine Mehrzahl verschiedener Sensoren oder Aktoren mit einem gemeinsamen Datentelegramm übertragen werden. Darüber hinaus lassen sich derartige Bussysteme mit vergleichsweise niedriger Komplexität sowohl in Bezug auf die Protokollgestaltung als auch die Verkabelung und Hardwarekonfiguration realisieren und stellen daher eine attraktive Alternative für wenig komplexe Systeme dar.

Nachteilig an Bussystemen mit einer Party-Line-Konfiguration ist jedoch, dass trotz des gemeinsamen Ansprechens der Teilnehmer, beispielsweise mittels der Übertragung eines gemeinsamen Datentelegramms mit entsprechenden Eingangsdaten, eine Übertragung entsprechender Ausgangsdaten, beispielsweise von Messdaten verschiedener Sensoren, nur über individuelle Datentelegramme möglich ist, so dass jeder an der Datenkommunikation teilnehmende Sensor seine Messdaten über ein individuelles Datentelegramm übermitteln muss.

Aus der Druckschrift DE 10 2005 053 103 A1 sind ein Verfahren und ein System zur Übertragung von zyklischen und azyklischen Daten bekannt. Aus der Druckschrift EP 1 748 338 A1 ist ein Verfahren zur Bandbreitenausnutzung bei Bussystemen bekannt. Aus der Druckschrift EP 2 028 797 A1 ist ein Verfahren zur Datenübertragung bekannt.

Eine Aufgabe der vorliegenden Erfindung besteht daher darin, ein Verfahren zur Datenkommunikation zwischen Teilnehmern in einem Automatisierungssystem bereitzustellen, das eine robuste und kompatible Datenkommunikation erlaubt, die auf einem technisch einfachen Kommunikationssystem realisierbar ist.

Die Aufgabe wird durch ein Verfahren gemäß dem unabhängigen Anspruch gelöst. Weitere vorteilhafte Ausführungen sind jeweils in den abhängigen Ansprüchen angegeben.

Nach einem Aspekt der Erfindung wird ein Verfahren zur Datenkommunikation zwischen Teilnehmern eines Automatisierungssystems mit einem aktiven Teilnehmer und zumindest zwei passiven Teilnehmern, welche wenigstens einen ersten passiven Teilnehmer und einen zweiten passiven Teilnehmer umfassen, wobei der aktive Teilnehmer und die passiven Teilnehmer über ein Bussystem miteinander verbunden sind, bereitgestellt, wobei der aktive Teilnehmer eingerichtet ist, mit Aussenden von Kommunikationsaufforderungen eine Datenkommunikation zu initiieren, und wobei die passiven Teilnehmer eingerichtet sind, als Reaktion auf die Kommunikationsaufforderungen entsprechende Antwortnachrichten auszusenden, wobei der erste passive Teilnehmer eine erste Anschalteinheit zum Bestimmen eines ersten Sendezeitpunkts zum Aussenden einer ersten Antwortnachricht durch den ersten passiven Teilnehmer umfasst, wobei der zweite passive Teilnehmer eine zweite Anschalteinheit zum Bestimmen eines zweiten Sendezeitpunkts zum Aussenden einer zweiten Antwortnachricht durch den zweiten Teilnehmer umfasst, und wobei das Verfahren umfasst:
Empfangen einer vom aktiven Teilnehmer ausgesendeten Schreibaufforderung zum Aussenden von Antwortnachrichten durch den ersten passiven Teilnehmer und den zweiten passiven Teilnehmer in einem ersten Empfangsschritt;
Bestimmen des ersten Sendezeitpunkts zum Aussenden der ersten Antwortnachricht durch die erste Anschalteinheit des ersten passiven Teilnehmers in einem ersten Bestimmungsschritt, wobei der erste Sendezeitpunkt einem Zeitpunkt entspricht, zu dem eine Anzahl von vom ersten passiven Teilnehmer gemäß einer fest definierten Datenübertragungsrate nach Empfang der Schreibaufforderung empfangenen Dateneinheiten gleich der ersten Anzahl ist;
Aussenden der ersten Antwortnachricht zum ersten Sendezeitpunkt durch den ersten passiven Teilnehmer in einem ersten Antwortschritt;
Empfangen der ersten Antwortnachricht durch den aktiven Teilnehmer und den zweiten passiven Teilnehmer in einem zweiten Empfangsschritt;
Bestimmen des zweiten Sendezeitpunkts zum Aussenden der zweiten Antwortnachricht durch die zweite Anschalteinheit in einem zweiten Bestimmungsschritt, wobei der zweite Sendezeitpunkt einem Zeitpunkt entspricht, zu dem eine Anzahl von vom zweiten passiven Teilnehmer gemäß der fest definierten Datenübertragungsrate nach Empfang der Schreibaufforderung empfangenen Dateneinheiten gleich der zweiten Anzahl ist;
Aussenden der zweiten Antwortnachricht zum zweiten Sendezeitpunkt durch den zweiten passiven Teilnehmer in einem zweiten Antwortschritt;
Empfangen der zweiten Antwortnachricht durch den aktiven Teilnehmer und den ersten passiven Teilnehmer in einem dritten Empfangsschritt; und
Interpretieren der ersten Antwortnachricht und der zweiten Antwortnachricht als ein erstes Datensegment und ein zweites Datensegment eines Datenpakets durch den aktiven Teilnehmer in einem Interpretationsschritt.

Hierdurch wird der technische Vorteil erreicht, dass ein Verfahren zur Datenkommunikation zwischen Teilnehmern eines Automatisierungssystems bereitgestellt werden kann, bei dem mehrere passive Teilnehmer des Automatisierungssystems von einem aktiven Teilnehmer über eine gemeinsame Schreibaufforderung beziehungsweise Kommunikationsaufforderung angesprochen werden können und die entsprechenden Antwortnachrichten der passiven Teilnehmer in einem gemeinsamen Datenelement zusammengefasst und als ein zusammenhängendes Datenelement, beispielsweise ein Datentelegramm, interpretiert werden können.

Hierzu kann eine Mehrzahl von passiven Teilnehmern über ein Bussystem mit einem aktiven Teilnehmer des Automatisierungssystems verbunden sein, wobei das Bussystem eingerichtet ist, von den Teilnehmern ausgesendete Dateneinheiten den jeweils anderen Teilnehmern des Bussystems zeitgleich bereitzustellen. So wird eine vom aktiven Teilnehmer ausgesendete Kommunikationsaufforderung zeitgleich von allen aktiven Teilnehmern des Bussystems empfangen.

Ein aktiver Teilnehmer ist im Sinne der Anmeldung ein Teilnehmer eines Bussystems, der eingerichtet ist, mit dem Aussenden entsprechender Kommunikationsaufforderungen an jeweils weitere Teilnehmer des Bussystems eine Datenkommunikation zwischen den Teilnehmern des Bussystems zu initiieren. Ein passiver Teilnehmer eines Bussystems ist im Sinne der Anmeldung ein Teilnehmer, der eine Datenkommunikation nicht aktiv initiieren kann, sondern ausschließlich eingerichtet ist, auf entsprechende Kommunikationsaufforderungen mit dem Aussenden von entsprechenden Antwortnachrichten zu reagieren. In einem Master-Slave-System könnten ein aktiver Teilnehmer durch einen Masterteilnehmer und ein passiver Teilnehmer durch einen Slaveteilnehmer realisiert sein.

Zum Initiieren einer Datenkommunikation bzw. zum Auffordern zur Aussendung entsprechender Antwortnachrichten reicht es für den aktiven Teilnehmer somit aus, lediglich eine Kommunikationsaufforderung an die jeweiligen passiven Teilnehmer des Bussystems auszusenden. Hierdurch kann vermieden werden, dass jeder einzelne passive Teilnehmer individuell mit dem Aussenden einer entsprechenden Kommunikationsaufforderung zum Aussenden entsprechender Antwortnachrichten angesprochen werden muss. Hierdurch kann eine Anzahl der für eine Datenkommunikation benötigten, zwischen dem aktiven Teilnehmer und den passiven Teilnehmern auszutauschenden Dateneinheiten verringert werden. Hierdurch kann eine Datenkommunikation zwischen dem aktiven Teilnehmer und den passiven Teilnehmern beschleunigt und vereinfacht werden.

Jeder der passiven Teilnehmer des Automatisierungssystems umfasst jeweils eine Anschalteinheit, die dazu eingerichtet ist, einen Zeitpunkt zum Aussenden einer Antwortnachricht auf eine entsprechende Kommunikationsaufforderung zu bestimmen. Durch die Anschalteinheiten der passiven Teilnehmer, die jeweils durch eine vom aktiven Teilnehmer ausgesendete Kommunikationsaufforderung zum Aussenden einer entsprechenden Antwortnachricht aufgefordert sind, kann für jeden Teilnehmer ein Sendezeitpunkt bestimmt werden, zu dem dieser die entsprechende Antwortnachricht dem aktiven Teilnehmer und gegebenenfalls den weiteren passiven Teilnehmern übermitteln kann, ohne eine Kollision mit einem zeitgleich sendenden weiteren passiven Teilnehmer zu bewirken. Über die Anschalteinheiten der einzelnen passiven Teilnehmer kann somit eine Sendereihenfolge der mehreren passiven Teilnehmer realisiert werden, in der jedem passiven Teilnehmer ein Sendezeitpunkt zugeordnet wird, zu dem ausschließlich der jeweilige passive Teilnehmer eine entsprechende Antwortnachricht aussenden darf. Hierdurch können Kollisionen bzw. zeitgleiches Aussenden mehrerer Antwortnachrichten durch verschiedene passive Teilnehmer vermieden werden.

Die Anschalteinheiten der passiven Teilnehmer sind eingerichtet, eine Anzahl der vom jeweiligen passiven Teilnehmer empfangenen Dateneinheiten zu erfassen und gemäß einer vorbestimmten Anzahl von zu empfangenden Dateneinheiten einen entsprechenden Sendezeitpunkt für den jeweiligen passiven Teilnehmer zu bestimmen. So kann in jeder Anschalteinheit der passiven Teilnehmer des Bussystems eine für den jeweiligen passiven Teilnehmer individuelle Anzahl von empfangenen Dateneinheiten definiert sein.

Somit kann eine Anschalteinheit eines passiven Teilnehmers die vom passiven Teilnehmer empfangenen Dateneinheiten zählen und eine Anzahl der empfangenen Dateneinheiten bestimmen und bei Übereinstimmung der Anzahl der empfangenen Dateneinheiten mit der vorbestimmten Anzahl den jeweiligen Zeitpunkt des Empfangs der Anzahl von Dateneinheiten als Sendezeitpunkt definieren und ein Aussenden einer entsprechenden Antwortnachricht bewirken. Indem in jeder Anschalteinheit eines jeden passiven Teilnehmers des Bussystems eine individuelle vorbestimmte Anzahl zu empfangender Dateneinheiten definiert ist, kann erreicht werden, dass jeder passive Teilnehmer zum Zeitpunkt, zu dem der jeweilige passive Teilnehmer eine Anzahl von Dateneinheiten empfangen hat, die der vorbestimmten Anzahl zu empfangender Dateneinheiten entspricht, eine entsprechende Antwortnachricht aussendet. Somit kann erreicht werden, dass jeder der passiven Teilnehmer des Bussystems zu einem für ihn reservierten Zeitpunkt eine entsprechende Antwortnachricht aussenden kann, ohne dass ein zeitgleiches Aussenden verschiedener Antwortnachrichten durch unterschiedliche passive Teilnehmer auftritt.

Die ausgesendeten Antwortnachrichten der passiven Teilnehmer können vom aktiven Teilnehmer als Datensegmente eines zusammenhängenden Datenpakets interpretiert werden. Das zusammenhängende Datenpaket kann beispielsweise ein Datentelegramm sein. Hierdurch kann erreicht werden, dass die einzelnen Antwortnachrichten der verschiedenen passiven Teilnehmer als ein zusammenhängendes Datenpaket bzw. Datentelegramm weiter berücksichtigt werden können. Dies ist beispielsweise vorteilhaft, wenn die einzelnen Informationen der passiven Teilnehmer, die in entsprechenden Antwortnachrichten dem aktiven Teilnehmer kommuniziert wurden, Teile eines Gesamtzustands eines Maschinenteils des Automatisierungssystems darstellen und zur Weiterverarbeitung der Information ausschließlich der Gesamtzustand des Maschinenteils von Interesse ist. Indem die einzelnen Antwortnachrichten der passiven Teilnehmer als Segmente eines zusammenhängenden Datenpakets interpretiert werden, kann eine vereinfachte Weiterverarbeitung und Weiterleitung der Informationen der einzelnen passiven Teilnehmer erreicht werden.

Eine Kommunikationsaufforderung ist im Sinne der Anmeldung eine Anfrage bzw. ein Befehl, die vom aktiven Teilnehmer an die passiven Teilnehmer übermittelt wird und das Aussenden einer entsprechenden Antwortnachricht durch die jeweiligen passiven Teilnehmer zur Folge haben kann. Eine Kommunikationsaufforderung kann beispielsweise einen Lesebefehl und entsprechende Ausgangsdaten umfassen, sodass die passiven Teilnehmer aufgefordert sind, die empfangenen Ausgangsdaten des aktiven Teilnehmers auszulesen. Alternativ kann eine Kommunikationsaufforderung einen Schreibbefehl umfassen, der die jeweiligen passiven Teilnehmer auffordert, entsprechende Eingangsdaten des passiven Teilnehmers über eine entsprechende Antwortnachricht an den aktiven Teilnehmer zu übermitteln.

Eine Schreibaufforderung ist im Sinne der Anmeldung eine Kommunikationsaufforderung, die einen Schreibbefehl umfasst, und die jeweiligen passiven Teilnehmer zum Aussenden von Eingangsdaten mittels entsprechender Antwortnachrichten auffordert.

Eine Antwortnachricht ist im Sinne der Anmeldung eine durch einen passiven Teilnehmer als Reaktion auf eine Kommunikationsaufforderung ausgesendete Nachricht. Eine Antwortnachricht kann beispielsweise Eingangsdaten des jeweiligen passiven Teilnehmers umfassen, gegebenenfalls Messdaten oder Statusdaten des jeweiligen Teilnehmers.

Ein passiver Teilnehmer kann im Sinne der Anmeldung ein Sensor oder Aktor eines Automatisierungssystems sein.

Eine Nachricht ist im Sinne der Anmeldung eine Signalfolge von über das jeweilige Bussystem übertragbarer Signale, die eingerichtet ist, einen Informationsgehalt zu übertragen. Im Sinne der Anmeldung sind die ersten und zweiten Antwortnachrichten und die Fehlernachrichten der passiven Teilnehmer wie auch die Schreibaufforderungen beziehungsweise Kommunikationsaufforderungen des aktiven Teilnehmers Nachrichten im oben genannten Sinn. Eine Nachricht kann eine Mehrzahl von Dateneinheiten umfassen oder lediglich aus einer Dateneinheit bestehen.

Eine Dateneinheit ist im Sinne der Anmeldung ein Bit, Byte oder eine im Stand der Technik gängige Einheit zur digitalen Datenübertragung.

Nach einer Ausführungsform umfasst das Verfahren ferner:
Bestimmen einer ersten Prüfsumme durch den ersten passiven Teilnehmer in einem ersten Prüfsummenbestimmungsschritt, wobei die erste Prüfsumme die vom aktiven Teilnehmer ausgesendete Schreibaufforderung über die vom ersten passiven Teilnehmer ausgesendete erste Antwortnachricht und die vom ersten passiven Teilnehmer empfangene zweite Antwortnachricht erstellt wird; und/oder
Bestimmen einer zweiten Prüfsumme durch den zweiten passiven Teilnehmer in einem zweiten Prüfsummenbestimmungsschritt, wobei die zweite Prüfsumme die vom aktiven Teilnehmer ausgesendete Schreibaufforderung über die vom zweiten passiven Teilnehmer empfangene erste Antwortnachricht und die vom zweiten passiven Teilnehmer ausgesendete zweite Antwortnachricht erstellt wird;
Bestimmen einer dritten Prüfsumme durch den aktiven Teilnehmer in einem dritten Prüfsummenbestimmungsschritt, wobei die dritte Prüfsumme die vom aktiven Teilnehmer ausgesendete Schreibaufforderung über die vom aktiven Teilnehmer empfangene erste Antwortnachricht und die vom aktiven Teilnehmer empfangene zweite Antwortnachricht erstellt wird;
Aussenden der dritten Prüfsumme durch den aktiven Teilnehmer an den ersten passiven Teilnehmer und den zweiten passiven Teilnehmer in einem Prüfsummensendeschritt; Überprüfen der dritten Prüfsumme auf Übereinstimmung mit der ersten Prüfsumme durch den ersten passiven Teilnehmer in einem ersten Prüfsummenprüfschritt; und/oder Überprüfen der dritten Prüfsumme auf Übereinstimmung mit der zweiten Prüfsumme durch den zweiten passiven Teilnehmer in einem zweiten Prüfsummenprüfschritt; und falls die dritte Prüfsumme nicht mit der ersten Prüfsumme und/oder der zweiten Prüfsumme übereinstimmt, Aussenden einer Fehlernachricht durch den ersten passiven Teilnehmer und/oder den zweiten passiven Teilnehmer in einem Fehlernachrichtsendeschritt; und
Verwerfen der ersten Antwortnachricht und/oder der zweiten Antwortnachricht und/oder des Datenpakets durch den aktiven Teilnehmer und/oder den ersten passiven Teilnehmer und/oder den zweiten passiven Teilnehmer in einem Verwerfungsschritt.

Hierdurch wird der technische Vorteil erreicht, dass eine einfache und schnelle Lösung zur Überprüfung der Richtigkeit der übertragenen Daten erreicht wird.

Jede durch einen passiven Teilnehmer ausgesendete Antwortnachricht steht neben dem aktiven Teilnehmer auch allen anderen passiven Teilnehmern des Bussystems bereit. Nach Aussenden der letzten Antwortnachricht des letzten passiven Teilnehmers des Bussystems können somit von jedem passiven Teilnehmer wie auch dem aktiven Teilnehmer Prüfsummen der ausgesendeten Antwortnachrichten erstellt werden. Die jeweiligen Prüfsummen basieren dabei auf der vom aktiven Teilnehmer ausgesendete Schreibaufforderung beziehungsweise Kommunikationsaufforderung und allen ausgesendeten Antwortnachrichten. Hierdurch kann vermieden werden, dass für jede Antwortnachricht eine individuelle Prüfsumme zur Verifikation der in der jeweiligen Antwortnachricht übertragenen Daten generiert wird.

Nach Generierung der Prüfsummen durch jeden der Teilnehmer des Bussystems wird vom aktiven Teilnehmer die vom aktiven Teilnehmer generierte Prüfsumme an die passiven Teilnehmer übermittelt und von den passiven Teilnehmern mit den jeweils generierten Prüfsummen der passiven Teilnehmer verglichen. Bei einer Abweichung der vom aktiven Teilnehmer generierten Prüfsumme und einer von einem der passiven Teilnehmer generierten Prüfsumme wird eine entsprechende Fehlernachricht ausgesendet und die ausgesendeten Antwortnachrichten als fehlerhaft verworfen. Es werden ausschließlich Prüfsummen generiert, die die vom aktiven Teilnehmer ausgesendete Schreibaufforderung beziehungsweise Kommunikationsaufforderung und alle ausgesendeten Antwortnachrichten umfassen und somit als Prüfsummen des zusammenhängenden Datenpakets, das alle ausgesendeten Antwortnachrichten als entsprechende Datensegmente umfasst, interpretiert.

Dadurch wird erreicht, dass eine geringe Anzahl von Prüfsummen generiert und ausgesendet wird, wodurch die Datenkommunikation zwischen den Teilnehmern des Bussystems zeitlich beschleunigt und vereinfacht wird. Da jeder Teilnehmer des Bussystems jeweils lediglich eine Prüfsumme für die vom aktiven Teilnehmer ausgesendete Schreibaufforderung beziehungsweise Kommunikationsaufforderung und die Gesamtheit der ausgesendeten Antwortnachrichten generieren muss, kann der Rechenaufwand zur Generierung der Prüfsummen verringert und somit die Datenkommunikation beschleunigt werden.

Da lediglich die vom aktiven Teilnehmer generierte Prüfsumme an die übrigen Teilnehmer des Bussystems übermittelt wird, kann eine Belegung des Bussystems durch das Aussenden von Prüfsummen auf ein Minimum reduziert und somit die Datenkommunikation zwischen den Teilnehmern des Bussystems zeitlich beschleunigt werden.

Dem aktiven Teilnehmer kann für das Empfangen einer Fehlernachricht von wenigstens einem der passiven Teilenehmer ein Wartezeitpunkt zugeordnet sein, während dessen der aktive Teilnehmer nach dem Aussenden der dritten Prüfsumme auf den Empfang einer entsprechenden Fehlernachricht durch wenigstens einen der passiven Teilnehmer wartet.

Eine Fehlernachricht kann dadurch realisiert sein, dass das Spannungsniveau des Bussystems für einen vorbestimmten Zeitraum durch wenigstens einen passiven Teilnehmer auf ein niedriges Niveau, sprich ein Low-Level, gebracht wird. Sobald ein passiver Teilnehmer eine Nichtübereinstimmung zwischen der dritten Prüfsumme und einer entsprechenden Prüfsumme des passiven Teilnehmers ermittelt, bringt dieser das Spannungsniveau des Bussystems auf ein niedriges Niveau. Hiermit ist für den aktiven Teilnehmer wie für alle weiteren passiven Teilnehmer die Datenkommunikation als fehlerhaft und damit fehlgeschlagen gekennzeichnet. Weitere passive Teilnehmer können, wenn diese ebenfalls Nichtübereinstimmungen zwischen der dritten Prüfsumme und den Prüfsummen der passiven Teilnehmer ermitteln, ebenfalls eine entsprechende Fehlernachricht aussenden beziehungsweise in die bereits bewirkte Fehlernachricht einstimmen. Somit können kollisionsfrei mehrere Teilnehmer zeitgleich Fehlernachrichten absetzen. Auch müssen den einzelnen passiven Teilnehmern zum Aussenden der Fehlernachrichten keine individuellen Sendezeitpunkte zugeordnet werden.

Eine Prüfsumme ist im Sinne der Anmeldung eine Verifikationsangabe, die es ermöglicht, die Richtigkeit der übertragenen Daten zu überprüfen. Eine Prüfsumme kann verschiedene aus dem Stand der Technik bekannte Verfahren zur Generierung entsprechender Verifikationsangaben umfassen.

Nach einer Ausführungsform umfasst das Verfahren ferner: falls die dritte Prüfsumme mit der ersten Prüfsumme und der zweiten Prüfsumme übereinstimmt, Interpretieren der dritten Prüfsumme als ein Prüfsegment des Datenpakets im Interpretationsschritt.

Hierdurch wird der technische Vorteil erreicht, dass die zur Verifikation der Richtigkeit der übertragenen Daten der ausgesendeten Antwortnachrichten erzeugte Prüfsumme als Prüfsumme für das die jeweiligen Antwortnachrichten umfassende Datenpaket für eine Weiterverarbeitung bzw. Übertragung des Datenpakets verwendet werden kann. Hierdurch kann vermieden werden, dass für eine Versendung des Datenpakets eine zusätzliche Prüfsumme generiert werden muss. Hierdurch kann wiederum eine Datenkommunikation beschleunigt bzw. ein Rechenaufwand des aktiven Teilnehmers verringert werden. Empfängt der aktive Teilnehmer während des entsprechenden Wartezeitraums nach dem Aussenden einer dritten Prüfsumme keine durch die passiven Teilnehmer ausgesendete Fehlernachricht kann der aktive Teilnehmer dieses Ausbleiben einer entsprechenden Fehlernachricht als eine Übereinstimmung der dritten Prüfsumme mit den durch die passiven Teilnehmer generierten Prüfsummen interpretieren. Alternativ können bei Übereinstimmung der dritten Prüfsumme mit den durch passiven Teilnehmer generierten Prüfsummen von den passiven Teilnehmern innerhalb des Wartezeitraums eine gemeinsame oder für jeden passiven Teilnehmer individuelle Übereinstimmungsnachricht ausgesendet werden, in der die Übereinstimmung der dritten Prüfsumme mit den Prüfsummen der passiven Teilnehmer bestätigt wird. Ein Empfang derartiger Übereinstimmungsnachrichten innerhalb des Wartezeitraums können durch den aktiven Teilnehmer demzufolge als Übereinstimmung der dritten Prüfsumme mit den Prüfsummen der passiven Teilnehmer interpretiert werden. Empfängt der aktive Teilnehmer während des Wartezeitraums hingegen keine derartige Übereinstimmungsnachricht, kann dieses vom aktiven Teilnehmer als eine Nichtübereinstimmung der dritten Prüfsumme und den Prüfsummen der passiven Teilnehmern und dementsprechend als eine fehlerhafte Übertragung wenigstens einer der jeweiligen Antwortnachrichten der passiven Teilnehmer auf die entsprechende Schreibaufforderung gewertet werden.

Nach einer Ausführungsform umfasst der erste Bestimmungsschritt:
Abzählen der nach Empfang der Schreibaufforderung durch den ersten passiven Teilnehmer empfangenen Dateneinheiten bis zum Erreichen der ersten Anzahl durch die erste Anschalteinheit in einem ersten Abzählschritt;
wobei der zweite Bestimmungsschritt umfasst:
   Abzählen der nach Empfang der Schreibaufforderung durch den zweiten passiven Teilnehmer empfangenen Dateneinheiten bis zum Erreichen der zweiten Anzahl durch die zweite Anschalteinheit in einem zweiten Abzählschritt.

Hierdurch wird der technische Vorteil erreicht, dass eine technisch einfach realisierbare Lösung zur Bestimmung der Sendezeitpunkte der einzelnen passiven Teilnehmer zum Aussenden der jeweiligen Antwortnachrichten bereitgestellt werden kann. Hierdurch wird wiederum ein einfach zu realisierendes Verfahren zum Generieren einer zuverlässigen Sendereihenfolge einzelner Antwortnachrichten verschiedener passiver Teilnehmer des Bussystems erreicht.

In jeder Anschalteinheit eines jeden passiven Teilnehmers kann eine individuelle Anzahl von zu empfangender Dateneinheiten des jeweiligen passiven Teilnehmers definiert werden. Bei Empfang einer Kommunikationsaufforderung eines aktiven Teilnehmers bzw. entsprechender Antwortnachrichten weiterer passiver Teilnehmer des Bussystems kann eine Anschalteinheit eines jeden passiven Teilnehmers die vom passiven Teilnehmer empfangenen Dateneinheiten zählen und eine Anzahl der empfangenen Dateneinheiten bestimmen. Erreicht die Anzahl der empfangenen Dateneinheiten die in der jeweiligen Anschalteinheit definierte Anzahl zu empfangender Dateneinheiten, so bestimmt die Anschalteinheit den jeweiligen Zeitpunkt des Empfangs der Anzahl von Dateneinheiten als Sendezeitpunkt und veranlasst ein Aussenden einer entsprechenden Antwortnachricht.

Somit kann über die Definition verschiedener Anzahlen zu empfangender Dateneinheiten für verschiedene Anschalteinheiten unterschiedlicher passiver Teilnehmer erreicht werden, dass jeder passive Teilnehmer zu einem Zeitpunkt eine entsprechende Antwortnachricht aussendet, zu dem kein weiterer passiver Teilnehmer eine Antwortnachricht sendet. Somit kann das Aussenden unterschiedlicher Nachrichten durch verschiedene Teilnehmer des Bussystems vermieden werden.

Nach einer Ausführungsform ist die erste Anzahl ein beliebiger Zahlenwert, wobei die zweite Anzahl nicht kleiner als eine Summe aus der ersten Anzahl und einer ersten Dateneinheitsanzahl der ersten Antwortnachricht ist, wobei die erste Dateneinheitsanzahl einer Anzahl von Dateneinheiten der ersten Antwortnachricht entspricht.

Hierdurch wird der technische Vorteil erreicht, dass eine einfache Lösung zur Generierung einer Sendereihenfolge von auszusendenden Antwortnachrichten unterschiedlicher passiver Teilnehmer bereitgestellt werden kann. Indem für jeden passiven Teilnehmer eine besondere Anzahl von zu empfangenden Dateneinheiten bestimmt wird, kann erreicht werden, dass jeder passive Teilnehmer zu einem Zeitpunkt Antwortnachrichten aussendet, zu dem kein weiterer passiver Teilnehmer entsprechende Antwortnachrichten aussendet. Indem eine erste Anzahl einer ersten Anschalteinheit eines ersten passiven Teilnehmers auf einen beliebigen Zahlenwert gesetzt wird, beispielsweise auf den Zahlenwert 0, kann erreicht werden, dass der erste Teilnehmer eine entsprechende erste Antwortnachricht unmittelbar nach Empfang einer Kommunikationsaufforderung bzw. Schreibaufforderung des aktiven Teilnehmers aussendet.

Ein Empfang einer Nachricht umfasst im Sinne der Anmeldung ein Empfangen aller Dateneinheiten der ausgesendeten Nachricht durch den entsprechenden Empfänger der Nachricht. Eine Empfangszeit einer Nachricht durch einen Teilnehmer entspricht hierbei dem Zeitpunkt des Empfangens der zuletzt empfangenen Dateneinheit der Nachricht.

Durch das Setzen der ersten Anzahl der ersten Anschalteinheit des ersten passiven Teilnehmers auf den Zahlenwert 0 wird somit erreicht, dass der erste passive Teilnehmer eine entsprechende erste Antwortnachricht unmittelbar nach Empfang der letzten Dateneinheit der entsprechenden Schreibaufforderung bzw. Kommunikationsaufforderung aussendet. Unmittelbar aussenden bedeutet im Sinne der Anmeldung, dass eine entsprechende Nachricht ausgesendet wird, bevor eine weitere Dateneinheit empfangen wird.

Durch das Setzen einer zweiten Anzahl einer zweiten Anschalteinheit eines zweiten passiven Teilnehmers auf einen Wert, der einer Summe aus der ersten Anzahl und einer ersten Dateneinheitsanzahl der ersten Antwortnachricht des ersten passiven Teilnehmers entspricht, kann erreicht werden, dass der zweite Teilnehmer eine entsprechende zweite Antwortnachricht unmittelbar nach Empfang der ersten Antwortnachricht des ersten passiven Teilnehmers aussendet. Eine Dateneinheitsanzahl einer Antwortnachricht ist im Sinne der Anmeldung eine Anzahl von Dateneinheiten der jeweiligen Antwortnachricht.

Indem die zweite Anzahl des zweiten passiven Teilnehmers wenigstens der Dateneinheitsanzahl der ersten Antwortnachricht des ersten passiven Teilnehmers entspricht, kann gewährleistet werden, dass der zweite Teilnehmer unmittelbar nach Empfang der ersten Antwortnachricht eine zweite Antwortnachricht aussendet. Für weitere passive Teilnehmer ist analog zu verfahren, indem die jeweiligen Anzahlen der zu empfangenden Dateneinheiten der jeweiligen passiven Teilnehmer einer Summe der Dateneinheitsanzahlen der Antwortnachrichten der in der Sendereihenfolge vor dem jeweiligen passiven Teilnehmer angeordneten passiven Teilnehmern entspricht.

Der erste passive Teilnehmer ist im Sinne der Anmeldung der passive Teilnehmer des Bussystems, der nach Empfang der Kommunikationsaufforderung bzw. Schreibaufforderung des aktiven Teilnehmers zuerst eine entsprechende erste Antwortnachricht aussendet. Ein zweiter passiver Teilnehmer ist dementsprechend ein passiver Teilnehmer, der in der Sendereihenfolge nach dem ersten passiven Teilnehmer eine zweite Antwortnachricht aussendet.

Nach einer Ausführungsform ist die erste Anzahl in der ersten Anschalteinheit definiert, wobei die zweite Anzahl in der zweiten Anschalteinheit definiert ist.

Hierdurch wird der technische Vorteil erreicht, dass eine einfach zu realisierende Sendereihenfolge der auszusendenden Antwortnachrichten erreicht werden kann. Indem in jeder Anschalteinheit eines jeden passiven Teilnehmers eine Anzahl der zu empfangenden Dateneinheiten durch den jeweiligen passiven Teilnehmer und ein damit verbundener Sendezeitpunkt zum Aussenden einer entsprechenden Antwortnachricht durch den jeweiligen passiven Teilnehmer definiert ist, kann eine Sendereihenfolge der auszusendenden Antwortnachrichten definiert werden, so dass zu jeder vom aktiven Teilnehmer ausgesendeten Kommunikationsaufforderung die passiven Teilnehmer in unveränderlicher Sendereihenfolge entsprechende Antwortnachrichten aussenden.

Nach einer Ausführungsform umfasst die Schreibaufforderung ferner eine Datenpaketlänge des Datenpakets, und wobei die Datenpaketlänge des Datenpakets wenigstens eine Summe einer ersten Dateneinheitsanzahl der ersten Antwortnachricht und einer zweiten Dateneinheitsanzahl der zweiten Antwortnachricht umfasst, wobei die zweite Dateneinheitsanzahl einer Anzahl von Dateneinheiten der zweiten Antwortnachricht entspricht.

Hierdurch wird der technische Vorteil erreicht, dass eine einfache Adressierung der einzelnen passiven Teilnehmer ermöglicht ist. Jede Anschalteinheit eines jeden passiven Teilnehmers ermittelt die vom jeweiligen passiven Teilnehmer empfangenen Antwortnachrichten bzw. zählt die vom passiven Teilnehmer empfangenen Dateneinheiten der jeweiligen Antwortnachrichten.

Darüber hinaus erkennt jede Anschalteinheit eines jeden passiven Teilnehmers die Anzahl von Dateneinheiten, die der jeweilige passive Teilnehmer empfangen haben muss, bevor dieser eine entsprechende Antwortnachricht aussenden kann, sprich die Position innerhalb der Sendereihenfolge der einzelnen Antwortnachrichten der unterschiedlichen passiven Teilnehmer. Liegt diese Anzahl der jeweiligen Anschalteinheit außerhalb der Datenpaketlänge des Datenpakets, so weiß die jeweilige Anschalteinheit, dass auf die jeweilige Kommunikationsaufforderung keine Antwortnachricht auszusenden ist.

Durch die Datenpaketlänge des Datenpakets, die in der vom aktiven Teilnehmer ausgesendeten Schreibaufforderung enthalten ist, werden somit ausschließlich die passiven Teilnehmer angesprochen, für die eine Summe der jeweiligen Dateneinheitsanzahlen der entsprechenden Antwortnachrichten innerhalb der Datenpaketlänge des Datenpakets liegt. Sendet beispielsweise auf eine entsprechende Schreibaufforderung der erste passive Teilnehmer eine erste Antwortnachricht, deren Dateneinheitsanzahl der Datenpaketlänge des Datenpakets entspricht, die in der Schreibaufforderung definiert ist, so weiß die zweite Anschalteinheit des zweiten Teilnehmers sowie alle übrigen Anschalteinheiten der übrigen passiven Teilnehmer, dass auf die entsprechende Schreibaufforderung keine zweite Antwortnachricht bzw. weitere Antwortnachrichten auszusenden sind. Durch die entsprechende Schreibaufforderung mit der angegebenen Datenpaketlänge des Datenpakets wäre somit ausschließlich der erste passive Teilnehmer adressiert.

Umfasst das Automatisierungssystem neben dem ersten passiven Teilnehmer und dem zweiten passiven Teilnehmer weitere passive Teilnehmer kann die Datenpaketlänge weitere Dateneinheitsanzahlen umfassen. Hierdurch können durch die Datenpaketlänge neben dem ersten passiven Teilnehmer und dem zweiten passiven Teilnehmer weitere passive Teilnehmer zum Aussenden entsprechender Antwortnachrichten adressiert werden. Alternativ kann durch eine entsprechende Datenpaketlänge lediglich der erste passive Teilnehmer angesprochen sein.

Darüber hinaus wird über die angegebene Datenpaketlänge des Datenpakets den passiven Teilnehmern signalisiert, wann die letzte Antwortnachricht durch den letzten passiven Teilnehmer in der Sendereihenfolge ausgesendet wurde, sodass die passiven Teilnehmer über alle ausgesendeten Antwortnachrichten eine entsprechende Prüfsumme erstellen können. Hierzu können die Anschalteinheiten der jeweiligen passiven Teilnehmer alle vom Empfang der entsprechenden Kommunikationsaufforderung bzw. Schreibaufforderung bis zur letzten Dateneinheit der letzten Antwortnachricht empfangenen Dateneinheiten registrieren und zählen.

Nach einer Ausführungsform gehen der aktive Teilnehmer, der erste passive Teilnehmer und der zweite passive Teilnehmer jeweils ausschließlich zum Aussenden von Dateneinheiten von einem Empfangsmodus in einen Sendemodus über, wobei ausgesendete Dateneinheiten mit einem Startbit, einem Stoppbit und einem Paritätsbit ausgebildet sind, wobei das Startbit einer Dateneinheit den Beginn und das Stoppbit einer Dateneinheit den Schluss der jeweiligen Dateneinheit darstellen, und wobei das Bussystem zwischen dem Aussenden von Dateneinheiten auf einem hohen Spannungsniveau betrieben wird.

Hierdurch wird der technische Vorteil erreicht, dass eine einfache Datenkommunikation zwischen den Teilnehmern des Bussystems erzielt werden kann. Ähnlich dem Universal Asynchronous Receiver Transmitter UART kann das Bussystem eingerichtet sein, in einem Ruhezustand auf einem High-Level betrieben zu werden. Die einzelnen Teilnehmer des Bussystems befinden sich durchgehend in diesem Modus, in dem diese über das Bussystem übertragene Daten auslesen können. Zum Senden kann jeweils nur ein Teilnehmer in einen Sendemodus wechseln und entsprechende Nachrichten bzw. Dateneinheiten aussenden, die von den übrigen Teilnehmern im Empfangsmodus empfangen werden können. Zur Kennzeichnung der einzelnen ausgesendeten Nachrichten umfasst jede Nachricht ein Startbit und ein Stoppbit, über die die jeweiligen Teilnehmer im Empfangsmodus die ausgesendeten Nachrichten als entsprechende Nachrichten identifizieren können. Hierdurch kann ein einfaches Bussystem realisiert werden, das eine geringe Protokollkomplexität und eine einfache Verkabelung umfasst.

Nach einer Ausführungsform ist das Bussystem als ein Party-Line-Bussystem ausgebildet, und wobei ausgesendete Kommunikationsaufforderungen und/oder Antwortnachrichten zeitgleich allen Teilnehmern des Bussystems bereitstehen.

Hierdurch wird der technische Vorteil erreicht, dass ein einfaches Bussystem realisiert werden kann, das eingerichtet ist, eine Adressierung mehrerer Teilnehmer über eine einzelne ausgesendete Nachricht zu ermöglichen. Zum Ansprechen der einzelnen passiven Teilnehmer durch den aktiven Teilnehmer genügt das Aussenden einer gemeinsamen Kommunikationsaufforderung bzw. Schreibaufforderung durch den aktiven Teilnehmer. Eine einzelne Adressierung durch das Aussenden individueller Nachrichten an einzelne passive Teilnehmer kann somit vermieden werden. Eine Datenkommunikation zwischen Teilnehmern des Bussystems kann hierdurch vereinfacht und beschleunigt werden.

Nach einer Ausführungsform umfasst die erste Antwortnachricht Nutzdaten des ersten passiven Teilnehmers und die zweite Antwortnachricht Nutzdaten des zweiten passiven Teilnehmers.

Hierdurch wird der technische Vorteil erreicht, dass eine einfache Lösung zur Übertragung von Nutzdaten einzelner Teilnehmer eines Automatisierungssystems bereitgestellt werden kann. Nutzdaten können beispielsweise Messdaten oder Statusdaten der jeweiligen Teilnehmer des Automatisierungssystems sein.

Nach einer Ausführungsform sind der erste passive Teilnehmer und der zweite passive Teilnehmer jeweils als ein Aktor oder Sensor des Automatisierungssystems ausgebildet, wobei der aktive Teilnehmer ein Busmaster des Bussystems ist.

Hierdurch wird der technische Vorteil erreicht, dass ein Verfahren zur Datenkommunikation zwischen Teilnehmern eines Automatisierungssystems bereitgestellt werden kann, das einen breiten Anwendungsbereich aufweist. Das Verfahren kann somit zur Steuerung verschiedener Sensoren und Aktoren eines Automatisierungssystems verwendet werden.

Die Erfindung wird anhand der beigefügten Figuren näher erläutert. Hierbei zeigen:
- Fig. 1: ein Flussdiagramm eines Verfahrens zur Datenkommunikation zwischen Teilnehmern eines Automatisierungssystems gemäß einer Ausführungsform;
- Fig. 2: ein weiteres Flussdiagramm des Verfahrens zur Datenkommunikation zwischen Teilnehmern eines Automatisierungssystems gemäß einer weiteren Ausführungsform;
- Fig. 3: eine schematische Darstellung eines zeitlichen Ablaufs einer Versendung von Nachrichten gemäß dem Verfahren zur Datenkommunikation zwischen Teilnehmern eines Automatisierungssystems gemäß einer Ausführungsform;
- Fig. 4: eine weitere schematische Darstellung eines zeitlichen Ablaufs einer Versendung von Nachrichten gemäß dem Verfahren zur Datenkommunikation zwischen Teilnehmern eines Automatisierungssystems gemäß einer Ausführungsform; und
- Fig. 5: eine schematische Darstellung eines durch das erfindungsgemäße Verfahren generierten Datenpakets gemäß einer Ausführungsform.

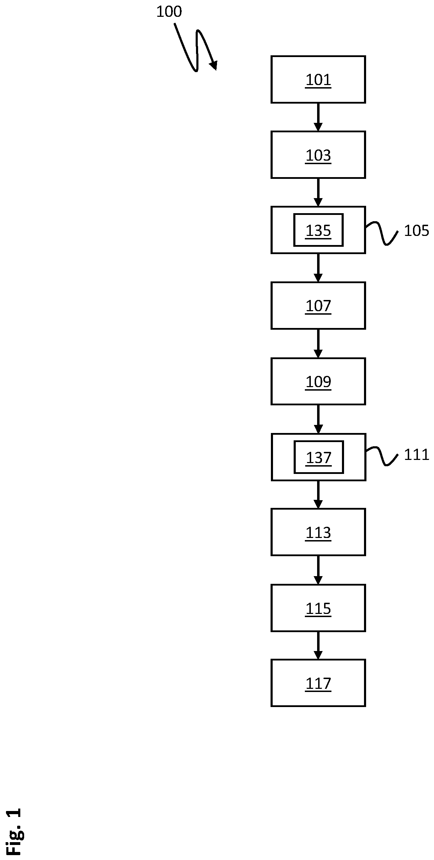

Fig. 1 zeigt ein Flussdiagramm eines Verfahrens 100 zur Datenkommunikation zwischen Teilnehmern eines Automatisierungssystems gemäß einer Ausführungsform.

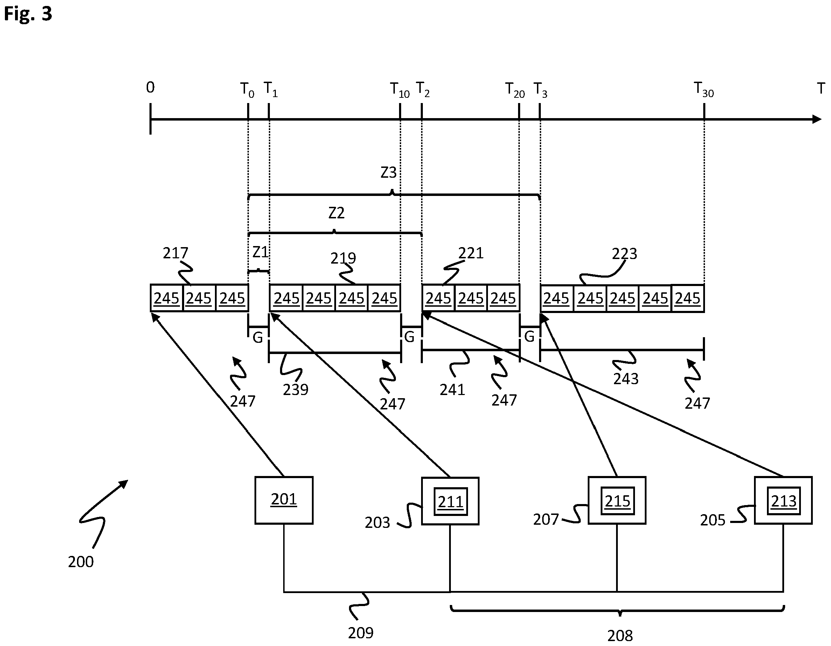

Das Verfahren 100 kann auf ein Automatisierungssystem 200 vergleichbar zu dem in Fig. 3 bis Fig. 5 dargestellten Automatisierungssystem bezogen werden. Die Beschreibung des Verfahrens 100 in Fig. 1 wird mit Bezug auf die Figuren Fig. 3 bis Fig. 5 vorgenommen.

Gemäß der Ausführungsform in Fig. 1 umfasst das Automatisierungssystem wenigstens einen aktiven Teilnehmer und wenigstens einen ersten passiven Teilnehmer und einen zweiten passiven Teilnehmer, die über ein Bussystem miteinander verbunden sind.

Ein aktiver Teilnehmer ist hierbei eingerichtet, mit Aussenden von Kommunikationsaufforderungen eine Datenkommunikation zwischen dem aktiven Teilnehmer und passiven Teilnehmern des Automatisierungssystems zu initiieren. Die passiven Teilnehmer sind hingegen eingerichtet sind, als Reaktion auf die Kommunikationsaufforderungen des aktiven Teilnehmers entsprechende Antwortnachrichten auszusenden.

In der Ausführungsform in Fig. 1 umfasst der erste passive Teilnehmer eine erste Anschalteinheit zum Bestimmen eines ersten Sendezeitpunkts zum Aussenden einer ersten Antwortnachricht durch den ersten passiven Teilnehmer, und der zweite passive Teilnehmer umfasst eine zweite Anschalteinheit zum Bestimmen eines zweiten Sendezeitpunkts zum Aussenden einer zweiten Antwortnachricht durch den zweiten Teilnehmer.

Gemäß Fig. 1 umfasst das Verfahren 100 die folgenden Schritte:
Empfangen einer vom aktiven Teilnehmer ausgesendeten Schreibaufforderung zum Aussenden von Antwortnachrichten durch den ersten passiven Teilnehmer und den zweiten passiven Teilnehmer in einem ersten Empfangsschritt 103;
Bestimmen des ersten Sendezeitpunkts zum Aussenden der ersten Antwortnachricht durch die erste Anschalteinheit des ersten passiven Teilnehmers in einem ersten Bestimmungsschritt 105, wobei der erste Sendezeitpunkt einer ersten Anzahl von Dateneinheiten entspricht, die vom ersten passiven Teilnehmer gemäß einer fest definierten Datenübertragungsrate nach Empfang der Schreibaufforderung empfangen werden;
Aussenden der ersten Antwortnachricht zum ersten Sendezeitpunkt durch den ersten passiven Teilnehmer in einem ersten Antwortschritt 107;
Empfangen der ersten Antwortnachricht durch den aktiven Teilnehmer und den zweiten passiven Teilnehmer in einem zweiten Empfangsschritt 109;
Bestimmen des zweiten Sendezeitpunkts zum Aussenden der zweiten Antwortnachricht durch die zweite Anschalteinheit des zweiten passiven Teilnehmers in einem zweiten Bestimmungsschritt 111, wobei der zweite Sendezeitpunkt einer zweiten Anzahl von Dateneinheiten entspricht, die vom zweiten passiven Teilnehmer gemäß einer fest definierten Datenübertragungsrate nach Empfang der Schreibaufforderung empfangen werden;
Aussenden der zweiten Antwortnachricht zum zweiten Sendezeitpunkt durch den zweiten passiven Teilnehmer in einem zweiten Antwortschritt 113;
Empfangen der zweiten Antwortnachricht durch den aktiven Teilnehmer und den ersten passiven Teilnehmer in einem dritten Empfangsschritt 115; und
Interpretieren der ersten Antwortnachricht und der zweiten Antwortnachricht als ein erstes Datensegment und ein zweites Datensegment eines Datenpakets durch den aktiven Teilnehmer in einem Interpretationsschritt 117.

In einem Sendeschritt 101 sendet der aktive Teilnehmer eine Schreibaufforderung an den ersten passiven Teilnehmer und den zweiten passiven Teilnehmer. Die Schreibaufforderung ist eine Kommunikationsaufforderung und umfasst mindestens eine Aufforderung zum Aussenden entsprechender Antwortnachrichten durch den ersten passiven Teilnehmer und den zweiten passiven Teilnehmer. Die Schreibaufforderung kann alternativ zusätzlich eine Datenpaketlänge aufweisen, die eine Anzahl von Dateneinheiten definiert, die vom aktiven Teilnehmer als Antwort auf die Schreibaufforderung in Form der ersten Antwortnachricht des ersten passiven Teilnehmers und der zweiten Antwortnachricht des zweiten passiven Teilnehmers erwartet wird.

In dem ersten Empfangsschritt 103 empfangen der erste passive Teilnehmer und der zweite passive Teilnehmer des Automatisierungssystems die vom aktiven Teilnehmer ausgesendete Schreibaufforderung. Durch die Schreibaufforderung des aktiven Teilnehmers sind sowohl der erste passive Teilnehmer als auch der zweite passive Teilnehmer adressiert und aufgefordert, eine entsprechende Antwortnachricht auszusenden.

Gemäß einer Ausführungsform kann das Bussystem als ein Party-Line-Bussystem ausgebildet sein. Hierdurch wird erreicht, dass jede ausgesendete Nachricht jedem der Teilnehmer des Bussystems bereitgestellt wird. Ferner kann erreicht werden, dass die ausgesendeten Nachrichten zeitgleich von allen übrigen Teilnehmern des Bussystems empfangen werden.

Nach Empfangen der ausgesendeten Schreibaufforderung durch den ersten passiven Teilnehmer wird in dem ersten Bestimmungsschritt 105 durch die erste Anschalteinheit des ersten passiven Teilnehmers der erste Zeitpunkt zum Aussenden der ersten Antwortnachricht durch den ersten passiven Teilnehmer bestimmt. Der erste Sendezeitpunkt ist hierbei als eine Anzahl von Dateneinheiten definiert, die durch den ersten passiven Teilnehmer gemäß einer fest definierten Datenübertragungsrate empfangen werden. Gemäß einer Ausführungsform kann die so definierte erste Anzahl in der ersten Anschalteinheit des ersten passiven Teilnehmers fest definiert und gespeichert sein. Das Aussenden der ersten Antwortnachricht durch den ersten passiven Teilnehmer ist somit an eine Anzahl von Dateneinheiten gekoppelt, die der erste Teilnehmer nach Empfang der Schreibaufforderung empfängt. Sobald der erste passive Teilnehmer nach Empfang der Schreibaufforderung eine Anzahl von Dateneinheiten empfangen hat, die der fest definierten ersten Anzahl entspricht, definiert die erste Anschalteinheit den Zeitpunkt des Empfangs der letzten Dateneinheit als den ersten Sendezeitpunkt und veranlasst ein Aussenden der ersten Antwortnachricht als Reaktion auf die empfangene Schreibaufforderung des aktiven Teilnehmers.

In der Ausführungsform in Fig. 1 zählt die erste Anschalteinheit hierzu in einem ersten Abzählschritt 135 die durch den ersten passiven Teilnehmer nach Empfang der Schreibaufforderung empfangenen Dateneinheiten.

Nach einer Ausführungsform kann die erste Anzahl auf einem beliebigen Zahlenwert, beispielsweise auf den Wert 0 gesetzt werden. Entspricht die erste Anzahl dem Wert 0, bestimmt die erste Anschalteinheit den ersten Sendezeitpunkt als den Zeitpunkt des Empfangs der Schreibaufforderung, insbesondere den Zeitpunkt des Empfangens der letzten Dateneinheit der Schreibaufforderung. Der erste Sendezeitpunkt folgt somit unmittelbar auf den Empfang der Schreibaufforderung.

Nach Bestimmen des ersten Sendezeitpunkts wird in dem ersten Antwortschritt 107 vom ersten passiven Teilnehmer eine erste Antwortnachricht ausgesendet.

Die erste Antwortnachricht kann Nutzdaten des ersten Teilnehmers umfassen. Insbesondere kann die erste Antwortnachricht Messdaten bzw. Zustandsdaten des ersten passiven Teilnehmers beinhalten, wobei der erste passive Teilnehmer insbesondere ein Aktor oder Sensor des Automatisierungssystems sein kann.

Die erste Antwortnachricht kann insbesondere als ein Datenpaket ausgebildet sein, das ausschließlich Nutzdaten umfasst. Alternativ kann die erste Antwortnachricht als ein Datenpaket ausgebildet sein, das neben Nutzdaten einen minimalen Protokoll-Overhead umfasst.

Nach Aussenden der ersten Antwortnachricht wird in dem zweiten Empfangsschritt 109 die erste Antwortnachricht durch den aktiven Teilnehmer und den zweiten passiven Teilnehmer empfangen. Es werden alle ausgesendeten Nachrichten durch alle Teilnehmer des Automatisierungssystems bzw. des Bussystems, mit Ausnahme des aussendenden Teilnehmers, empfangen.

Darauf folgend wird in dem zweiten Bestimmungsschritt 111 von der zweiten Anschalteinheit des zweiten passiven Teilnehmers der zweite Sendezeitpunkt zum Aussenden der zweiten Antwortnachricht durch den zweiten passiven Teilnehmer bestimmt. Der zweite Sendezeitpunkt entspricht dabei einer zweiten Anzahl von Dateneinheiten, die vom zweiten passiven Teilnehmer gemäß der fest definierten Datenübertragungsrate empfangen wurden. Gemäß der Bestimmung des ersten Sendezeitpunkts durch die erste Anschalteinheit führt die zweite Anschalteinheit hierzu in einem zweiten Abzählschritt 137 einen Abzählvorgang der beginnend mit dem Empfang der Schreibaufforderung durch den zweiten passiven Teilnehmer empfangenen Dateneinheiten durch. Sobald die zweite Anschalteinheit eine Anzahl von empfangenen Dateneinheiten registriert hat, die der definierten zweiten Anzahl entspricht, veranlasst die Anschalteinheit das Aussenden einer zweiten Antwortnachricht durch den zweiten passiven Teilnehmer.

Die zweite Antwortnachricht kann analog zur ersten Antwortnachricht Nutzdaten des zweiten passiven Teilnehmers, insbesondere Messdaten bzw. Statusdaten des zweiten Teilnehmers umfassen. Analog zum ersten passiven Teilnehmer kann der zweite passive Teilnehmer ein Sensor oder ein Aktor des Automatisierungssystems sein.

Gemäß einer Ausführungsform kann die erste Anzahl der ersten Anschalteinheit auf einen beliebigen Zahlenwert gesetzt werden. Die zweite Anzahl kann einer Summe der ersten Anzahl und einer Dateneinheitsanzahl der ersten Antwortnachricht entsprechen, wobei eine Dateneinheitsanzahl einer Antwortnachricht einer Anzahl von Dateneinheiten der jeweiligen Antwortnachricht entspricht. Beispielsweise kann die erste Anzahl auf den Zahlenwert 0 gesetzt werden, wodurch bewirkt wird, dass die erste Antwortnachricht unmittelbar nach Empfang der Schreibaufforderung, insbesondere unmittelbar nach Empfang der letzten Dateneinheit der Schreibaufforderung, durch den ersten passiven Teilnehmer ausgesendet wird. Die erste Antwortnachricht kann eine erste Dateneinheitsanzahl umfassen, die eine Anzahl der von der ersten Antwortnachricht umfassten Dateneinheiten beschreibt. Durch das Definieren der zweiten Anzahl als Summe aus der ersten Anzahl der ersten Anschalteinheit und der ersten Datenlänge der ersten Antwortnachricht wird somit erreicht, dass die zweite Antwortnachricht unmittelbar nach Empfang der ersten Antwortnachricht durch den zweiten passiven Teilnehmer ausgesendet wird. Hierzu zählt die zweite Anschalteinheit alle Dateneinheiten, die nach Empfang der Schreibaufforderung vom zweiten passiven Teilnehmer empfangen wurden, bis die empfangenen Dateneinheiten die zweite Anzahl erreichen, und veranlasst das Aussenden der zweiten Antwortnachricht.

Darauf folgend wird in dem zweiten Antwortschritt 113 die zweite Antwortnachricht zum zweiten Sendezeitpunkt durch den zweiten passiven Teilnehmer ausgesendet.

Hierauf folgend wird in dem dritten Empfangsschritt 115 die zweite Antwortnachricht durch den aktiven Teilnehmer und den ersten passiven Teilnehmer empfangen.

Nach Empfang der zweiten Antwortnachricht durch den aktiven Teilnehmer werden die erste Antwortnachricht und die zweite Antwortnachricht als das erste Datensegment und das zweite Datensegment des Datenpakets durch den aktiven Teilnehmer in dem Interpretationsschritt 117 interpretiert. Durch die Interpretation der ersten Antwortnachricht und der zweiten Antwortnachricht als erste und zweite Datensegmente eines Datenelements wird erreicht, dass die einzelnen Antwortnachrichten der passiven Teilnehmer in einem zusammenhängenden Datenpaket, insbesondere einem Datentelegramm, weiterverarbeitet werden können.

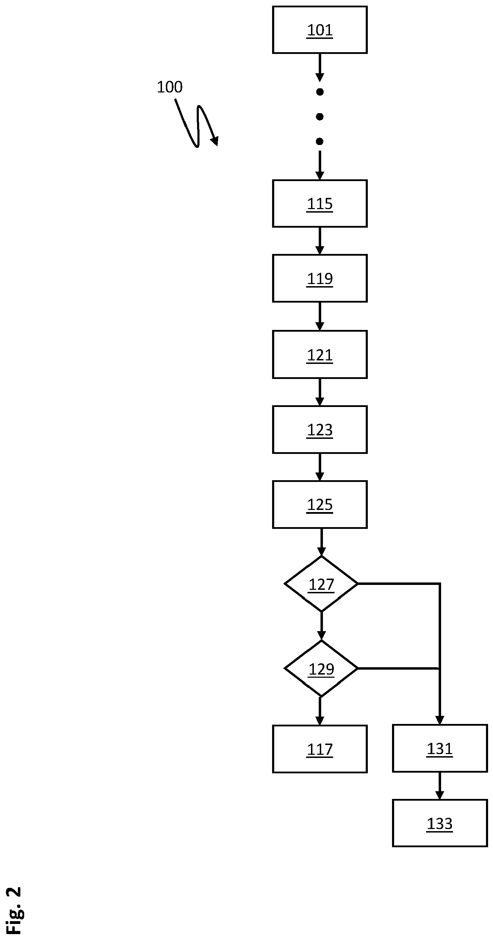

Fig. 2 zeigt ein weiteres Flussdiagramm des Verfahrens 100 zur Datenkommunikation zwischen Teilnehmern eines Automatisierungssystems gemäß einer weiteren Ausführungsform.

Die Beschreibung des Verfahrens 100 in Fig.2 wird mit Bezug auf die Figuren Fig. 3 bis Fig. 5 vorgenommen.

Die Ausführungsform in Fig. 2 basiert auf der Ausführungsform in Fig. 1 und umfasst alle in Fig. 1 gezeigten Verfahrensschritte. Aufgrund der Übersichtlichkeit werden im Folgenden die Verfahrensschritte der Ausführungsform in Fig. 1 einschließlich des dritten Empfangsschritts 115 nicht erneut diskutiert.

Nach Empfang der zweiten Antwortnachricht durch den aktiven Teilnehmer und den ersten passiven Teilnehmer im dritten Empfangsschritt 115 wird in einem ersten Prüfsummenbestimmungsschritt 119 vom ersten passiven Teilnehmer eine erste Prüfsumme bestimmt. Die erste Prüfsumme basiert auf der vom aktiven Teilnehmer ausgesendeten Schreibaufforderung beziehungsweise Kommunikationsaufforderung und der vom ersten passiven Teilnehmer ausgesendeten ersten Antwortnachricht und der vom ersten passiven Teilnehmer empfangenen zweiten Antwortnachricht.

In einem zweiten Prüfsummenbestimmungsschritt 121 wird vom zweiten passiven Teilnehmer eine zweite Prüfsumme bestimmt. Die zweite Prüfsumme basiert auf der vom aktiven Teilnehmer ausgesendeten Schreibaufforderung beziehungsweise Kommunikationsaufforderung und der vom zweiten passiven Teilnehmer empfangenen ersten Antwortnachricht und der vom zweiten passiven Teilnehmer ausgesendeten zweiten Antwortnachricht.

In einem dritten Prüfsummenbestimmungsschritt 123 wird vom aktiven Teilnehmer eine dritte Prüfsumme bestimmt. Die dritte Prüfsumme basiert auf der vom aktiven Teilnehmer ausgesendeten Schreibaufforderung beziehungsweise Kommunikationsaufforderung und der vom aktiven Teilnehmer empfangenen ersten Antwortnachricht und der vom aktiven Teilnehmer empfangenen zweiten Antwortnachricht.

Darauf folgend wird in einem Prüfsummensendeschritt 125 die dritte Prüfsumme vom aktiven Teilnehmer an den ersten passiven Teilnehmer und den zweiten passiven Teilnehmer ausgesendet.

In einem ersten Prüfsummenprüfschritt 127 überprüft der erste passive Teilnehmer die dritte Prüfsumme auf Übereinstimmung mit der ersten Prüfsumme.

In einem zweiten Prüfsummenprüfschritt 129 überprüft der zweite passive Teilnehmer die dritte Prüfsumme auf Übereinstimmung mit der zweiten Prüfsumme.

Stimmt die dritte Prüfsumme sowohl mit der ersten Prüfsumme als auch der zweiten Prüfsumme überein, wird die dritte Prüfsumme im Interpretationsschritt 117 als ein Prüfsegment des Datenelements durch den aktiven Teilnehmer interpretiert. Das Datenelement kann somit als ein vollständiges Datentelegramm eines entsprechenden Busprotokolls bzw. Datenkommunikationsprotokolls mit einer individuellen Prüfsumme vervollständigt werden.

Wird im ersten Prüfsummenprüfschritt 127 und/oder im zweiten Prüfsummenprüfschritt 129 eine Abweichung der dritten Prüfsumme von der ersten Prüfsumme und/oder von der zweiten Prüfsumme erkannt, so sendet der erste passive Teilnehmer und/oder der zweite passive Teilnehmer in einem Fehlernachrichtsendeschritt 131 eine Fehlernachricht aus.

Darauf folgend wird in einem Verwerfungsschritt 133 das Datenelement, insbesondere die erste Antwortnachricht und die zweite Antwortnachricht, als fehlerhaft verworfen. Eine Datenkommunikation bzw. eine Verwertung der in den Antwortnachrichten der passiven Teilnehmer enthaltenen Nutzdaten erfolgt nicht.

Fig. 3 zeigt eine schematische Darstellung eines zeitlichen Ablaufs einer Versendung von Nachrichten 247 gemäß dem Verfahren 100 zur Datenkommunikation zwischen Teilnehmern eines Automatisierungssystems 200 gemäß einer Ausführungsform.

Fig. 3 illustriert eine Datenkommunikation gemäß der Ausführungsform des Verfahrens 100 in Fig. 1.

In Fig. 3 ist ein Automatisierungssystem 200 gezeigt mit einem aktiven Teilnehmer 201 und drei passiven Teilnehmern 208, insbesondere einem ersten passiven Teilnehmer 203, einem zweiten passiven Teilnehmer 205 und einem dritten passiven Teilnehmer 207, wobei der aktive Teilnehmer 201 und die passiven Teilnehmer 208 über ein Bussystem 209 miteinander verbunden sind. Der erste passive Teilnehmer 203 weist eine erste Anschalteinheit 211 auf. Der zweite passive Teilnehmer 205 weist eine zweite Anschalteinheit 213 auf. Der dritte passive Teilnehmer 207 weist eine dritte Anschalteinheit 215 auf. Die passiven Teilnehmer 208 können mit dem aktiven Teilnehmer 201 über das Aussenden von Nachrichten 247 kommunizieren. Das Bussystem 209 kann beispielsweise als ein Party-Line-Bussystem ausgebildet und eingerichtet sein, um jedem der passiven Teilnehmer 208 und dem aktiven Teilnehmer 201 ausgesendete Nachrichten 247 bereitzustellen. Insbesondere kann das Bussystem 209 ausgebildet sein, den passiven Teilnehmern 208 und dem aktiven Teilnehmer 201 ausgesendete Nachrichten 247 zeitgleich bereitzustellen.

Im oberen Bereich der Fig. 3 ist ein zeitlicher Ablauf T einer Datenkommunikation gemäß dem Verfahren 100 in der Ausführungsform in Fig. 1 dargestellt. Hierzu sind vier verschiedene Nachrichten 247 dargestellt, die an einer Zeitachse mit entsprechenden Zeitpunkten zeitlich verortet sind. In Fig. 3 sind somit vier aufeinander folgend ausgesendete und empfangene Nachrichten 247 dargestellt.

Die einzelnen Nachrichten 247 umfassen jeweils unterschiedliche Anzahlen von Dateneinheiten 245. Die Dateneinheiten 245 können Bits, Bytes oder andere im Stand der Technik anerkannte Einheiten zur digitalen Datenkommunikation sein. Die Nachrichten 247 können zusammenhängende Datenpakete sein. Vorzugsweise sind die Nachrichten 247 Datenpakete mit einem minimalen Protokoll-Overhead, bzw. Datenpakete, die ausschließlich Nutzdaten umfassen.

Zu einem beliebigen Zeitpunkt, in Fig. 3 mit dem Wert 0 bezeichnet, sendet der aktive Teilnehmer 201 eine Schreibaufforderung 217 an die passiven Teilnehmer 208 aus. Die Schreibaufforderung 217 adressiert alle passiven Teilnehmer 208 des Automatisierungssystems 200 und umfasst wenigstens eine Aufforderung zum Aussenden von Antwortnachrichten durch die passiven Teilnehmer 208.

Das Aussenden der Schreibaufforderung 217 durch den aktiven Teilnehmer 201 ist durch den entsprechenden vom aktiven Teilnehmer 201 ausgehenden Pfeil dargestellt. Analog sind die Aussendeprozesse der weiteren Nachrichten 247 durch die passiven Teilnehmer 208 durch entsprechende Pfeile dargestellt.

Die Schreibaufforderung 217 kann beispielsweise einen Schreibbefehl umfassen, der die passiven Teilnehmer 208 zum Aussenden entsprechender Antwortnachrichten mit entsprechenden Eingangsdaten der passiven Teilnehmer 208 auffordert. Ferner kann die Schreibaufforderung 217 eine logische Adresse der passiven Teilnehmer 208 umfassen, mit der einzelne oder mehrere passive Teilnehmer 208 des Bussystems 209 adressiert werden können. Darüber hinaus kann die Schreibanforderung 217 eine Datenpaketlänge 229 definieren, die eine Anzahl an Dateneinheiten 245 angibt, die als Antwort auf die ausgesendete Schreibaufforderung 217 von den adressierten passiven Teilnehmern 208 erwartet wird. Dies kann die Antwortnachrichten der passiven Teilnehmer 208 inklusive einer Prüfsummennachricht umfassen.

Die Dateneinheitsanzahlen der Antwortnachrichten der einzelnen passiven Teilnehmer 208 können vordefiniert sein, sodass jeder passive Teilnehmer 208 ausschließlich Antwortnachrichten mit derselben vordefinierten Datenlänge aussenden kann. Alternativ können die Datenlängen verschiedener Antwortnachrichten eines passiven Teilnehmers 208 variieren.

Zu einem 0-ten Zeitpunkt T0 wird die ausgesendete Schreibaufforderung 217 von den passiven Teilnehmern 208 empfangen. Der Empfang der Schreibaufforderung 217, wie im Übrigen der Empfang aller weiteren Nachrichten 247, umfasst das Empfangen sämtlicher Dateneinheiten 245 der jeweiligen empfangenen Nachricht 247.

Nach Empfang der Schreibaufforderung 217 durch den ersten passiven Teilnehmer 203 sendet dieser zu einem ersten Sendezeitpunkt T1 eine erste Antwortnachricht 219 aus.

In der Ausführungsform in Fig. 3 ist zwischen aufeinander folgenden Nachrichten 247 jeweils eine Sendelücke G eingefügt. In der in Fig. 3 gezeigten Ausführungsform wird das Bussystem 209 gemäß dem UART-Protokoll betrieben und die passiven Teilnehmer 208 bzw. der aktive Teilnehmer 201 werden lediglich zum Aussenden der Nachrichten 247 in einen Sendemodus überführt. Wird keine Nachricht 247 ausgesendet, befinden sich der aktive Teilnehmer 201 bzw. die passiven Teilnehmer 208 in einem Empfangsmodus, in dem diese eingerichtet sind, ausgesendete Nachrichten 247 zu empfangen. Die Sendelücke G zwischen dem Empfangen einer Nachricht 247 und dem Aussenden einer weiteren Nachricht 247, beispielsweise zwischen dem Empfangen der Schreibaufforderung 217 zum 0-ten Zeitpunkt T0 und dem Aussenden der ersten Antwortnachricht 219 zum ersten Sendezeitpunkt T1, berücksichtigt das Umschalten des sendenden Teilnehmers der vorangegangenen Nachricht 247, beispielsweise des ersten aktiven Teilnehmers 201, vom Sendemodus in den Empfangsmodus.

Die Verzögerung des Sendezeitpunkts gegenüber dem Empfangszeitpunkt gemäß der Sendelücke G kann in den Anschalteinheiten der passiven Teilnehmer 208 berücksichtigt werden. Die Bestimmung der Sendezeitpunkte durch die Anschalteinheiten gemäß der in den Abzählschritten durchgeführten Abzählvorgänge der nach Empfang der Schreibaufforderung 217 empfangenen Dateneinheiten 245 wird durch die zu berücksichtigende Sendelücke G nicht beeinträchtigt.

Da in den Sendelücken keine Dateneinheiten 245 versendet und keine Dateneinheiten 245 empfangen werden, tragen die Sendelücken G zu den in Fig. 3 gezeigten ersten Anzahl Z1, zweiten Anzahl Z2 und dritten Anzahl Z3 den Wert Null bei.

In der Ausführungsform in Fig. 3 entspricht bei der ersten Anschalteinheit 211 des ersten passiven Teilnehmers 203 die erste Anzahl Z1 der nach dem Empfang der Schreibaufforderung 217 empfangenen Dateneinheiten 245 dem Zahlenwert 0.

Der erste passive Teilnehmer 203 sendet somit nach Empfang der Schreibaufforderung 217 zum 0-ten Zeitpunkt T0 und dem Ablauf der ersten Sendelücke G zum 1-ten Zeitpunkt T1 die erste Antwortnachricht 219 gemäß dem ersten Antwortschritt 107 aus. Im ersten Bestimmungsschritt 105 wird somit ein Zählvorgang gemäß dem ersten Abzählschritt 135 durch die erste Anschalteinheit 211 ausgeführt, in dem Null zu empfangende Dateneinheiten 245 gezählt werden, sodass ein Aussenden der ersten Antwortnachricht 107 unmittelbar nach Empfang der Schreibaufforderung 217 durch den ersten passiven Teilnehmer 203 erfolgt und somit nach Empfang der Schreibaufforderung 217 und vor dem Aussenden der ersten Antwortnachricht 219 im ersten Antwortschritt 107 durch den ersten passiven Teilnehmer 203 keine weiteren Dateneinheiten 245 empfangen werden.

Die erste Antwortnachricht 219 weist in der Ausführungsform in Fig. 3 eine erste Dateneinheitsanzahl 239 auf und umfasst vier Dateneinheiten 245.

Nach Aussenden der ersten Antwortnachricht 219 empfangen der aktive Teilnehmer 201, der zweite passive Teilnehmer 205 und der dritte passive Teilnehmer 207 gemäß dem zweiten Empfangsschritt 109 die erste Antwortnachricht 219 zum ersten Empfangszeitpunkt T10. Der Empfang einer Nachricht 247 erfolgt zum Zeitpunkt des Empfangs der letzten Dateneinheit 245 der jeweiligen Nachricht 247.

Nach Empfang der ersten Antwortnachricht 219 führt die zweite Anschalteinheit 213 des zweiten passiven Teilnehmers 205 eine Bestimmung des zweiten Sendezeitpunkts T2 gemäß dem zweiten Bestimmungsschritt 111 durch eine Abzählung der empfangenen Dateneinheiten 245 nach dem Empfang der Schreibaufforderung 217 zum 0-ten Zeitpunkt T0 gemäß dem zweiten Abzählschritt 137 durch. In der Ausführungsform in Fig. 3 entspricht die zweite Anzahl Z2, da Z1 gleich Null ist und zur zweiten Anzahl Z2 nicht beiträgt, der zweiten Anschalteinheit 213 der ersten Dateneinheitsanzahl 239 der ersten Antwortnachricht 219. In der zweiten Ausführungsform entspricht die zweite Anzahl Z2 somit dem Zahlenwert 4.

Nach Empfang der Schreibaufforderung 217 zum 0-ten Zeitpunkt T0 führt die zweite Anschalteinheit 213 den zweiten Abzählschritt 137 durch und zählt die vom zweiten passiven Teilnehmer 205 empfangenen Dateneinheiten 245. Nach Empfang der ersten Antwortnachricht 219 hat der zweite passive Teilnehmer 205 vier Dateneinheiten 245 der ersten Antwortnachricht 219 empfangen. Die zweite Anschalteinheit 213 ist somit im zweiten Abzählschritt 137 nach Empfang der ersten Antwortnachricht 219 zum ersten Empfangszeitpunkt T10 an der zweiten Anzahl Z2 angelangt. Somit sendet der zweite passive Teilnehmer 205 eine zweite Antwortnachricht 221 nach Empfang der ersten Antwortnachricht 219 und dem Ablauf einer weiteren Sendelücke G zu einem zweiten Sendezeitpunkt T2 aus. Nach Empfang der ersten Antwortnachricht 219 und vor dem Aussenden der zweiten Antwortnachricht 221 durch den zweiten passiven Teilnehmer 205 werden vom zweiten passiven Teilnehmer 205 keine weiteren Dateneinheiten 245 empfangen.

Die ausgesendete zweite Antwortnachricht 221 umfasst in der Ausführungsform in Fig. 3 drei Dateneinheiten 245 und eine zweite Dateneinheitsanzahl 241.

Die vom zweiten passiven Teilnehmer 205 gemäß dem zweiten Antwortschritt 113 ausgesendete zweite Antwortnachricht 221 wird vom aktiven Teilnehmer 201, vom ersten passiven Teilnehmer 203 und vom dritten passiven Teilnehmer 207 zum zweiten Empfangszeitpunkt T20 empfangen.

Analog dem ersten Bestimmungsschritt 105 und dem zweiten Bestimmungsschritt 111 bestimmt der dritte passive Teilnehmer 207 bzw. die dritte Anschalteinheit 215 einen dritten Sendezeitpunkt T3 zum Aussenden einer dritten Antwortnachricht 223. Hierzu wird gemäß dem ersten Abzählschritt 135 und dem zweiten Abzählschritt 137 ein Abzählvorgang der vom dritten passiven Teilnehmer 207 nach Empfang der Schreibaufforderung 217 empfangenen Dateneinheiten 245 vorgenommen. Zum Bestimmen des dritten Sendezeitpunkts T3 umfasst die dritte Anschalteinheit 215 eine dritte Anzahl Z3 zu empfangender Dateneinheiten 245, die angibt, ab welcher Anzahl empfangener Dateneinheiten 245 eine Antwortnachricht durch den dritten passiven Teilnehmer 207 auszusenden ist.

In der in Fig. 3 gezeigten Ausführungsform entspricht die dritte Anzahl Z3 einer Summe aus der ersten Anzahl Z1, die in der vorliegenden Ausführungsform den Wert Null ergibt, der ersten Dateneinheitsanzahl 239 der ersten Antwortnachricht 219 und der zweiten Dateneinheitsanzahl 241 der zweiten Antwortnachricht 221. Die dritte Anzahl Z3 entspricht somit dem Zahlenwert 7.

Nach Empfangen der zweiten Antwortnachricht 221 zum zweiten Empfangszeitpunkt T20 durch den dritten passiven Teilnehmer 207 hat der dritte passive Teilnehmer 207 somit nach Empfang der Schreibaufforderung 217 zum 0-ten Zeitpunkt T0 sieben Dateneinheiten 245 empfangen und somit die dritte Anzahl Z3 erreicht. Die dritte Schalteinheit 215 veranlasst somit das Aussenden einer dritten Antwortnachricht 223 zu einem dritten Sendezeitpunkt T3 nach Empfang der zweiten Antwortnachricht 221 zu einem zweiten Empfangszeitpunkt T20 und nach Ablauf der entsprechenden Sendelücke G. Nach Empfang der zweiten Antwortnachricht 221 zum zweiten Empfangszeitpunkt T20 und vor dem Aussenden der dritten Antwortnachricht 223 zum dritten Sendezeitpunkt T3 empfängt der dritte passive Teilnehmer 207 somit keine weiteren Dateneinheiten 245.

Die dritte Antwortnachricht 223 wird analog dem ersten Antwortschritt 107 bzw. dem zweiten Antwortschritt 113 ausgesendet. Die dritte Antwortnachricht 223 umfasst in der in Fig. 3 gezeigten Ausführungsform fünf Dateneinheiten 245 und eine dritte Dateneinheitsanzahl 243. Zu einem dritten Empfangszeitpunkt T30 empfangen der aktive Teilnehmer 201, der erste passive Teilnehmer 203 und der zweite passive Teilnehmer 205 die dritte Antwortnachricht 223.

Gemäß dem Interpretationsschritt 117 interpretiert der aktive Teilnehmer 201 die empfangene erste Antwortnachricht 219, die empfangene zweite Antwortnachricht 221 und die empfangene dritte Antwortnachricht 223 als ein zusammenhängendes Datenpaket.

In Fig. 3 ist der zweite Teilnehmer 205 an dritter Stelle bzw. der dritte Teilnehmer 207 an zweiter Stelle innerhalb des Bussystems 209 angeordnet. Hierdurch ist illustriert, dass die Sendereihenfolge der ausgesendeten Antwortnachrichten nicht an die Reihenfolge der angeordneten passiven Teilnehmer 208 im Bussystem 209 gebunden ist. Die Sendereihenfolge der auszusendenden Nachrichten 247, bzw. Antwortnachrichten, kann unabhängig von der Anordnung der passiven Teilnehmer 208 im Bussystem 209 durch entsprechende Definitionen innerhalb der Anschalteinheiten der entsprechenden passiven Teilnehmer 208 verändert werden. Durch eine entsprechende Festlegung der Sendezeitpunkte der Antwortnachrichten in den entsprechenden Anschalteinheiten kann eine beliebige Sendereihenfolge realisiert werden.

Die passiven Teilnehmer 208 können beispielsweise als Sensoren oder Aktoren des Automatisierungssystems 200 ausgebildet sein. Die Anschalteinheiten der passiven Teilnehmer 208 können innerhalb der passiven Teilnehmer 208 angeordnet und als Application Specific Integrated Circuit ASIC ausgebildet sein.

Die Antwortnachrichten der einzelnen passiven Teilnehmer 208 können Nutzdaten, insbesondere Messdaten oder Statusdaten der passiven Teilnehmer 208 umfassen.

Die vom aktiven Teilnehmer 201 und den passiven Teilnehmern 208 ausgesendeten Nachrichten 247 können als abgeschlossene Datenelemente ausgebildet sein. Insbesondere können die Nachrichten 247 gemäß dem UART-Protokoll mit einem minimalen Protokoll-Overhead versehen sein oder ausschließlich Nutzdaten umfassen. Gemäß dem UART-Protokoll können die Nachrichten 247 jeweils ein Startbit und ein Stoppbit zum Kennzeichnen des Anfangs und des Endes der jeweiligen Nachricht 247 und gegebenenfalls ein Paritätsbit eine mögliche Überprüfung der Richtigkeit der übertragenen Daten beziehungsweise einer Dateneinheit 245 der ausgesendeten Nachricht 247 umfassen. Gemäß dem UART-Protokoll kann das Bussystem 209 zwischen dem Aussenden von Nachrichten 247 auf einem High-Level, sprich einem hohen Spannungsniveau, betrieben werden. Die Startbits, Stoppbits und Paritätsbits der ausgesendeten Nachrichten 247 können in den Abzählschritten des Verfahrens 100 als übertragene Dateneinheit 245 berücksichtigt werden. Alternativ können auch einzelnen Dateneinheiten 245 mit Startbit, Stoppbit und Paritätsbit versehen sein.

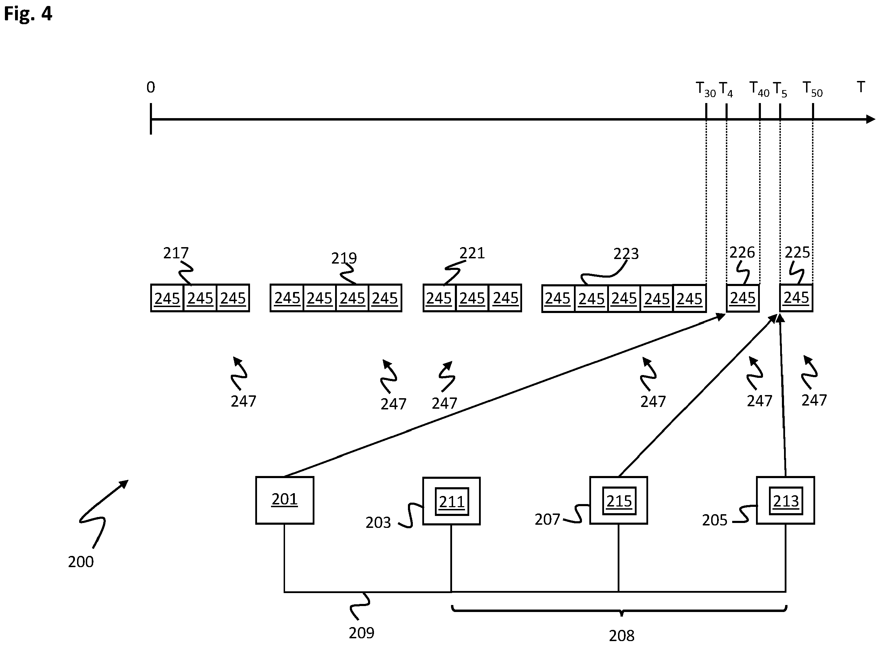

Fig. 4 zeigt eine weitere schematische Darstellung eines zeitlichen Ablaufs einer Versendung von Nachrichten 247 gemäß dem Verfahren 100 zur Datenkommunikation zwischen Teilnehmern eines Automatisierungssystems 200 gemäß einer Ausführungsform.

In Fig. 4 ist aufbauend auf dem in Fig. 3 gezeigten Sendevorgang das Verfahren 100 gemäß der Ausführungsform in Fig. 2 illustriert. Aus Gründen der Übersichtlichkeit sind einige der in Fig. 3 dargestellten Elemente, auf die es im Zusammenhang mit der Beschreibung der Fig. 4 nicht ankommt, in die Darstellung der Fig. 4 nicht übernommen worden.

Nach Empfangen der ersten Antwortnachricht 219, der zweiten Antwortnachricht 221 und der dritten Antwortnachricht 223 durch den aktiven Teilnehmer 201, den ersten passiven Teilnehmer 203, den zweiten passiven Teilnehmer 205 und den dritten passiven Teilnehmer 207 wird im ersten Prüfsummenbestimmungsschritt 119 vom ersten passiven Teilnehmer 203 eine erste Prüfsumme bestimmt. Die erste Prüfsumme basiert auf der vom aktiven Teilnehmer 201 ausgesendete Schreibaufforderung 217, die vom ersten passiven Teilnehmer 203 ausgesendete erste Antwortnachricht 219 und die vom ersten passiven Teilnehmer 203 empfangene zweite Antwortnachricht 221 und die vom ersten passiven Teilnehmer 203 empfangene dritte Antwortnachricht 223.

In einem zweiten Prüfsummenbestimmungsschritt 121 bestimmt der zweite passive Teilnehmer 205 eine zweite Prüfsumme. Die zweite Prüfsumme betrifft die vom aktiven Teilnehmer 201 ausgesendete Schreibaufforderung 217, die vom zweiten passiven Teilnehmer 205 empfangene erste Antwortnachricht 219, die vom zweiten passiven Teilnehmer 205 ausgesendete zweite Antwortnachricht 221 und die vom zweiten passiven Teilnehmer 205 empfangene dritte Antwortnachricht 223.

Gemäß einem weiteren Prüfsummenbestimmungsschritt bestimmt der dritte passive Teilnehmer 207 eine weitere Prüfsumme. Die weitere Prüfsumme basiert auf der vom aktiven Teilnehmer 201 ausgesendeten Schreibaufforderung 217, auf der vom dritten passiven Teilnehmer 207 empfangenen ersten Antwortnachricht 219 und der vom dritten passiven Teilnehmer 207 empfangenen zweiten Antwortnachricht 221 und der vom dritten passiven Teilnehmer 207 gesendeten dritten Antwortnachricht 223.

In einem dritten Prüfsummenbestimmungsschritt 123 bestimmt der aktive Teilnehmer 201 die dritte Prüfsumme. Die dritte Prüfsumme basiert auf der vom aktiven Teilnehmer 201 ausgesendete Schreibaufforderung 217, auf der vom aktiven Teilnehmer 201 empfangenen ersten Antwortnachricht 219, zweiten Antwortnachricht 221 und dritten Antwortnachricht 223.

Darauffolgend sendet der aktive Teilnehmer 201 gemäß dem Prüfsummensendeschritt 125 die dritte Prüfsumme in einer Prüfsummennachricht 226 zu einem vierten Sendezeitpunkt T4 an die passiven Teilnehmer 208. Nach Empfang der Prüfsummennachricht 226 durch die passiven Teilnehmer 208 zu einem vierten Empfangszeitpunkt T40 überprüfen die passiven Teilnehmer 208 gemäß den Prüfsummenüberprüfungsschritten des Verfahrens 100 die dritte Prüfsumme auf Übereinstimmung mit den jeweils von den passiven Teilnehmern 208 generierten Prüfsummen. So überprüft der erste passive Teilnehmer 203 die dritte Prüfsumme mit der generierten ersten Prüfsumme. Der zweite passive Teilnehmer 205 überprüft die dritte Prüfsumme mit der generierten zweiten Prüfsumme. Der dritte passive Teilnehmer 207 überprüft die dritte Prüfsumme mit der generierten weiteren Prüfsumme.

Wird in den Prüfsummenüberprüfungsschritten festgestellt, dass eine Abweichung zwischen den durch die passiven Teilnehmer 208 generierten Prüfsummen und der dritten Prüfsumme des aktiven Teilnehmers 201 besteht, sendet der jeweilige passive Teilnehmer 208 gemäß dem Fehlernachrichtsendeschritt 131 eine Fehlernachricht 225. Hierzu kann dem aktiven Teilnehmer 201 ein Wartezeitraum zugewiesen sein, innerhalb dem der aktive Teilnehmer 201 nach Aussenden der dritten Prüfsumme auf den Empfang einer entsprechenden Fehlernachricht 225 durch wenigstens einen der passiven Teilnehmer 208 wartet. Empfängt der aktive Teilnehmer 201 während des entsprechenden Wartezeitraums keine Fehlernachricht 225 von wenigstens einem passiven Teilnehmer 208, kann der aktive Teilnehmer 201 dies als eine Übereinstimmung zwischen der dritten Prüfsumme und den durch die passiven Teilnehmer 208 errechneten Prüfsummen interpretieren. Empfängt der aktive Teilnehmer 201 während des Wartezeitraums nach Aussenden der dritten Prüfsumme hingegen eine Fehlernachricht 225 von wenigstens einem passiven Teilnehmer 208, wird dies als eine Nichtübereinstimmung der dritten Prüfsumme mit wenigstens einer der durch die passiven Teilnehmer 208 errechneten Prüfsummen gedeutet und die Übertragung der Gesamtheit der ausgesendeten Antwortnachrichten wird als fehlerhaft interpretiert.

In der Ausführungsform in Fig. 4 wurde vom zweiten passiven Teilnehmer 205 eine Abweichung der dritten Prüfsumme zur zweiten Prüfsumme und vom dritten passiven Teilnehmer 207 eine Abweichung der dritten Prüfsumme zur generierten weiteren Prüfsumme erkannt. Zu einem fünften Sendezeitpunkt T5 senden der zweite passive Teilnehmer 205 und der dritte passive Teilnehmer 207 eine gemeinsame Fehlernachricht 225, die zu einem fünften Empfangszeitpunkt T50 vom aktiven Teilnehmer 201 und den jeweiligen passiven Teilnehmern 208 empfangen wird. Eine Fehlernachricht 225 kann beispielsweise eine mehrere Dateneinheiten 245 umfassende Low-Level-Nachricht sein, in der das Bussystem 209 auf ein niedriges Spannungsniveau gebracht wird. Somit können mehrere passive Teilnehmer 205 zeitgleich eine Fehlernachricht 225 aussenden. Durch die Aussendung der Fehlernachricht 225 wird das die erste Antwortnachricht 219, die zweite Antwortnachricht 221 und die dritte Antwortnachricht 223 umfassende Datenpaket verworfen und die Information der Antwortnachrichten der passiven Teilnehmer 208 nicht weiter berücksichtigt.

Für den Fall, dass die passiven Teilnehmer 208 eine Übereinstimmung zwischen der dritten Prüfsumme und den von den passiven Teilnehmern 208 generierten Prüfsummen identifizieren, wird die dritte Prüfsumme vom aktiven Teilnehmer 201 als ein Prüfsegment des Datensegments aufgefasst. Auf eine Übereinstimmung kann der aktive Teilnehmer 201 aus dem Ausbleiben einer entsprechenden Fehlernachricht 225 durch einen der passiven Teilnehmer 208 schließen. Bei Übereinstimmung der dritten Prüfsumme mit den von den passiven Teilnehmern 208 generierten Prüfsummen kann alternativ während des Wartezeitraums eine Übereinstimmungsnachricht von den passiven Teilnehmern 208 an den aktiven Teilnehmer 201 ausgesendet werden.

Die in Fig. 3 und Fig. 4 dargestellte Ausführungsform des Verfahrens 100 und des Automatisierungssystems 200 dient ausschließlich der Illustration grundlegender Mechanismen des Verfahrens 100 und Eigenschaften des Automatisierungssystems 200. Eine Einschränkung der vorliegenden Erfindung auf die in Bezug auf Fig. 3 und Fig. 4 angeführte Beschreibung soll nicht erzielt werden. Das Verfahren 100 kann in verschiedenen Gesichtspunkten variiert werden. So kann das Verfahren 100 auf eine beliebige Anzahl von aktiven Teilnehmern 201 und passiven Teilnehmern 208 eines Automatisierungssystems 200 angewendet werden. Die dargestellten Nachrichten 247, insbesondere die Anzahl der Dateneinheiten 245 der Nachrichten 247, kann beliebig verändert werden. Die Anzahl der von den passiven Teilnehmern 208 ausgesendeten Antwortnachrichten ist ebenfalls beliebig variierbar. Die einzelnen in den Anschalteinheiten der passiven Teilnehmern 208 definierten Anzahlen zu empfangener Dateneinheiten 245 kann beliebig verändert werden. Insbesondere können die jeweiligen Anzahlen in den entsprechenden Anschalteinheiten fest definiert sein. Alternativ können die verschiedenen Anzahlen veränderbar bestimmt sein.

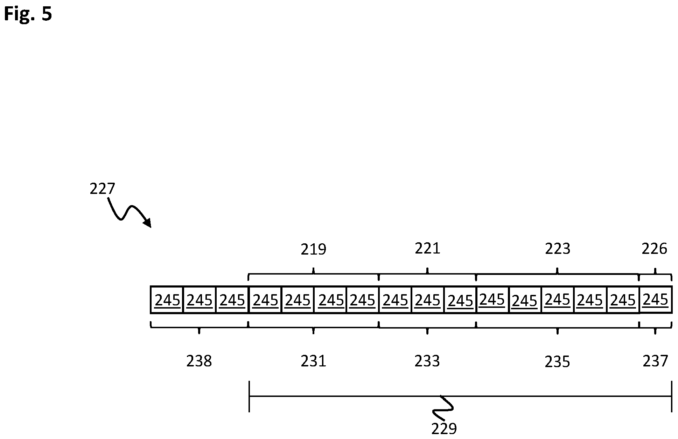

Fig. 5 zeigt eine schematische Darstellung eines durch das Verfahren 100 generierten Datenpakets 227 gemäß einer Ausführungsform.

In Fig. 5 sind die erste Antwortnachricht 219, die zweite Antwortnachricht 221 und die dritte Antwortnachricht 223 aus Fig. 3 und Fig. 4 in ein Datenpaket 227 zusammengefasst. Die erste Antwortnachricht 219, bzw. die vier Dateneinheiten 245 der ersten Antwortnachricht 219 bilden hierbei ein erstes Datensegment 231 des Datenelements 227. Die drei Dateneinheiten 245 der zweiten Antwortnachricht 221 bilden ein zweites Datensegment 233. Die fünf Dateneinheiten 245 der dritten Antwortnachricht 223 bilden ein drittes Datensegment 235 des Datenelements 227. Ferner ist die dritte Prüfsumme von der Prüfsummennachricht 226 als eine Dateneinheit 245 eines Prüfsegments 237 in das Datenelement 227 integriert. Empfängt der aktive Teilnehmer 201 während des Wartezeitraums hingegen keine Übereinstimmungsnachricht, kann dies durch den aktiven Teilnehmer 201 als eine Nichtübereinstimmung der dritten Prüfsumme mit wenigstens einer der Prüfsummen der passiven Teilnehmer 208 gewertet werden, und die Übertragung der Gesamtheit der ausgesendeten Antwortnachrichten wird vergleichbar zum Empfang einer Fehlernachricht 225 als fehlerhaft interpretiert.

Ferner umfasst das Datenpaket 227 ein Kopfsegment 238 mit hier bespielhaft dargestellten 3 Dateneinheiten 245. Das Kopfsegment 238 kann insbesondere die Schreibaufforderung 217 umfassen. Mit dem Kopfsegment 238, dem ersten Datensegment 231, dem zweiten Datensegment 233, dem dritten Datensegment 235 und dem Prüfsegment 237 ist das Datenpaket 227 als ein vollständiges Datentelegramm eines entsprechenden Busprotokolls ausgebildet. Durch die Zusammenfassung der Antwortnachrichten in dem als Datentelegramm ausgestalteten Datenpaket 227 können die Nutzdaten der einzelnen passiven Teilnehmer 208 des Automatisierungssystems 200 als eine gemeinsame Information, beispielsweise eines Gesamtzustands der passiven Teilnehmer 208 in einem zusammenhängenden Datentelegramm im Zuge eines durch das Automatisierungssystem 200 zu steuernden Automatisierungsprozesses weiterverarbeitet werden.

In der Ausführungsform in Fig. 5 umfasst die in der Schreibanforderung 217 definierte Datenpaketlänge 229 die Dateneinheiten 245 der ersten Antwortnachricht 219, der zweiten Antwortnachricht 221, der dritten Antwortnachricht 223 und der Prüfsummennachricht 226.

Alternativ kann das Datenelement 227 mit von der in Fig. 5 dargestellten Anordnung abweichender Anordnung der Segmente des Datenelements 227 ausgebildet sein. Die in Fig. 5 angeführten Dateneinheiten 245, insbesondere die in Fig. 5 dargestellte Anzahl an Dateneinheiten 245, dient ausschließlich illustrativen Zwecken und ist beliebig veränderbar.

### Bezugszeichenliste

- 100: Verfahren zur Datenkommunikation zwischen Teilnehmern eines Automatisierungssystems
- 101: Sendeschritt
- 103: erster Empfangsschritt
- 105: erster Bestimmungsschritt
- 107: erster Antwortschritt
- 109: zweiter Empfangsschritt
- 111: zweiter Bestimmungsschritt
- 113: zweiter Antwortschritt
- 115: dritter Empfangsschritt
- 117: Interpretationsschritt
- 119: erster Prüfsummenbestimmungsschritt
- 121: zweiter Prüfsummenbestimmungsschritt
- 123: dritter Prüfsummenbestimmungsschritt
- 125: Prüfsummensendeschritt
- 127: erster Prüfsummenprüfschritt
- 129: zweiter Prüfsummenprüfschritt
- 131: Fehlernachrichtsendeschritt
- 133: Verwerfungsschritt
- 135: erster Abzählschritt
- 137: zweiter Abzählschritt

- 200: Automatisierungssystem
- 201: aktiver Teilnehmer
- 203: erster passiver Teilnehmer
- 205: zweiter passiver Teilnehmer
- 207: dritter passiver Teilnehmer
- 208: passiver Teilnehmer
- 209: Bussystem
- 211: erste Anschalteinheit
- 213: zweite Anschalteinheit
- 215: dritte Anschalteinheit
- 217: Schreibaufforderung
- 219: erste Antwortnachricht
- 221: zweite Antwortnachricht
- 223: dritte Antwortnachricht
- 225: Fehlernachricht
- 226: Prüfsummennachricht
- 227: Datenpaket
- 229: Datenpaketlänge
- 231: erstes Datensegment
- 233: zweites Datensegment
- 235: drittes Datensegment
- 237: Prüfsegment
- 238: Kopfsegment
- 239: erste Dateneinheitsanzahl
- 241: zweite Dateneinheitsanzahl
- 243: dritte Dateneinheitsanzahl
- 245: Dateneinheit
- 247: Nachricht

- T0: nullter Empfangszeitpunkt
- T1: erster Sendezeitpunkt
- T10: erster Empfangszeitpunkt
- T2: zweiter Sendezeitpunkt
- T20: zweiter Empfangszeitpunkt
- T3: dritter Sendezeitpunkt
- T30: dritter Empfangszeitpunkt
- T4: vierter Sendezeitpunkt
- T40: vierter Empfangszeitpunkt
- T5: fünfter Sendezeitpunkt
- T50: fünfter Empfangszeitpunkt
- Z1: erste Anzahl
- Z2: zweite Anzahl
- Z3: dritte Anzahl
- G: Sendelücke

## Patentansprüche

1. Verfahren (100) zur Datenkommunikation zwischen Teilnehmern eines Automatisierungssystems (200) mit einem aktiven Teilnehmer (201) und zumindest zwei passiven Teilnehmern (208), welche wenigstens einen ersten passiven Teilnehmer (203) und einen zweiten passiven Teilnehmer (205) umfassen, wobei der aktive Teilnehmer (201) und die passiven Teilnehmer (208) über ein Bussystem (209) miteinander verbunden sind, wobei der aktive Teilnehmer (201) eingerichtet ist, mit Aussenden von Kommunikationsaufforderungen eine Datenkommunikation zu initiieren, und wobei die passiven Teilnehmer (208) eingerichtet sind, als Reaktion auf die Kommunikationsaufforderungen entsprechende Antwortnachrichten auszusenden, wobei der erste passive Teilnehmer (203) eine erste Anschalteinheit (211) zum Bestimmen eines ersten Sendezeitpunkts (T1) zum Aussenden einer ersten Antwortnachricht (219) durch den ersten passiven Teilnehmer (203) umfasst, und wobei der zweite passive Teilnehmer (205) eine zweite Anschalteinheit (213) zum Bestimmen eines zweiten Sendezeitpunkts (T2) zum Aussenden einer zweiten Antwortnachricht (221) durch den zweiten Teilnehmer (205) umfasst, umfassend:
Empfangen einer vom aktiven Teilnehmer (201) ausgesendeten Schreibaufforderung (217) zum Aussenden von Antwortnachrichten durch den ersten passiven Teilnehmer (203) und den zweiten passiven Teilnehmer (205) in einem ersten Empfangsschritt (103); **gekennzeichnet durch**:
Abzählen von nach Empfang der Schreibaufforderung (217) durch den ersten passiven Teilnehmer (203) empfangenen Dateneinheiten (245) bis zum Erreichen einer ersten Anzahl (Z1) durch die erste Anschalteinheit (211) in einem ersten Abzählschritt (135) und Bestimmen des ersten Sendezeitpunkts (T1) zum Aussenden der ersten Antwortnachricht (219) durch die erste Anschalteinheit (211) des ersten passiven Teilnehmers (203) in einem ersten Bestimmungsschritt (105), wobei der erste Sendezeitpunkt (T1) einem Zeitpunkt entspricht, zu dem eine Anzahl von vom ersten passiven Teilnehmer (203) gemäß einer fest definierten Datenübertragungsrate nach Empfang der Schreibaufforderung (217) empfangenen Dateneinheiten (245) gleich der ersten Anzahl (Z1) ist;
Aussenden der ersten Antwortnachricht (219) zum ersten Sendezeitpunkt (T1) durch den ersten passiven Teilnehmer (203) in einem ersten Antwortschritt (107);
Empfangen der ersten Antwortnachricht (219) durch den aktiven Teilnehmer (201) und den zweiten passiven Teilnehmer (205) in einem zweiten Empfangsschritt (109);
Abzählen von nach Empfang der Schreibaufforderung (217) durch den zweiten passiven Teilnehmer (205) empfangenen Dateneinheiten (245) bis zum Erreichen einer zweiten Anzahl (Z2) durch die zweite Anschalteinheit (213) in einem zweiten Abzählschritt (137) und Bestimmen des zweiten Sendezeitpunkts (T2) zum Aussenden der zweiten Antwortnachricht (221) durch die zweite Anschalteinheit (213) in einem zweiten Bestimmungsschritt (111), wobei der zweite Sendezeitpunkt (T2) einem Zeitpunkt entspricht, zu dem eine Anzahl von vom zweiten passiven Teilnehmer (205) gemäß der fest definierten Datenübertragungsrate nach Empfang der Schreibaufforderung (217) empfangenen Dateneinheiten (245) gleich der zweiten Anzahl (Z2) ist;
Aussenden der zweiten Antwortnachricht (221) zum zweiten Sendezeitpunkt (T2) durch den zweiten passiven Teilnehmer (205) in einem zweiten Antwortschritt (113);
Empfangen der zweiten Antwortnachricht (221) durch den aktiven Teilnehmer (201) und den ersten passiven Teilnehmer (203) in einem dritten Empfangsschritt (115); und
Interpretieren der ersten Antwortnachricht (219) und der zweiten Antwortnachricht (221) als ein erstes Datensegment (231) und ein zweites Datensegment (233) eines Datenpakets (227) durch den aktiven Teilnehmer (201) in einem Interpretationsschritt (117).

2. Verfahren (100) nach Anspruch 1, ferner umfassend:
Bestimmen einer ersten Prüfsumme durch den ersten passiven Teilnehmer (203) in einem ersten Prüfsummenbestimmungsschritt (119), wobei die erste Prüfsumme über die vom aktiven Teilnehmer (201) ausgesendete Schreibaufforderung, die vom ersten passiven Teilnehmer (203) ausgesendete erste Antwortnachricht (219) und die vom ersten passiven Teilnehmer (203) empfangene zweite Antwortnachricht (221) erstellt wird; und/oder
Bestimmen einer zweiten Prüfsumme durch den zweiten passiven Teilnehmer (205) in einem zweiten Prüfsummenbestimmungsschritt (121), wobei die zweite Prüfsumme über die vom aktiven Teilnehmer (201) ausgesendete Schreibaufforderung, die vom zweiten passiven Teilnehmer (205) empfangene erste Antwortnachricht (219) und die vom zweiten passiven Teilnehmer (205) ausgesendete zweite Antwortnachricht (221) erstellt wird;
Bestimmen einer dritten Prüfsumme durch den aktiven Teilnehmer (201) in einem dritten Prüfsummenbestimmungsschritt (123), wobei die dritte Prüfsumme über die vom aktiven Teilnehmer ausgesendete Schreibaufforderung, die vom aktiven Teilnehmer (201) empfangene erste Antwortnachricht (219) und die vom aktiven Teilnehmer (201) empfangene zweite Antwortnachricht (221) erstellt wird;
Aussenden der dritten Prüfsumme durch den aktiven Teilnehmer (201) an den ersten passiven Teilnehmer (203) und den zweiten passiven Teilnehmer (205) in einem Prüfsummensendeschritt (125);
Überprüfen der dritten Prüfsumme auf Übereinstimmung mit der ersten Prüfsumme durch den ersten passiven Teilnehmer (203) in einem ersten Prüfsummenprüfschritt (127); und/oder
Überprüfen der dritten Prüfsumme auf Übereinstimmung mit der zweiten Prüfsumme durch den zweiten passiven Teilnehmer (205) in einem zweiten Prüfsummenprüfschritt (129); und
falls die dritte Prüfsumme nicht mit der ersten Prüfsumme und/oder der zweiten Prüfsumme übereinstimmt: Aussenden einer Fehlernachricht (225) durch den ersten passiven Teilnehmer (203) und/oder den zweiten passiven Teilnehmer (205) in einem Fehlernachrichtsendeschritt (131), und
Verwerfen der ersten Antwortnachricht (219) und/oder der zweiten Antwortnachricht (221) und/oder des Datenpakets (227) durch den aktiven Teilnehmer (201) und/oder den ersten passiven Teilnehmer (203) und/oder den zweiten passiven Teilnehmer (205) in einem Verwerfungsschritt (133).

3. Verfahren (100) nach Anspruch 2, ferner umfassend: falls die dritte Prüfsumme mit der ersten Prüfsumme und der zweiten Prüfsumme übereinstimmt, Interpretieren der dritten Prüfsumme als ein Prüfsegment (237) des Datenpakets im Interpretationsschritt (117).

4. Verfahren (100) nach einem der voranstehenden Ansprüche, wobei die erste Anzahl (Z1) ein beliebiger Zahlenwert ist, und wobei die zweite Anzahl (Z2) nicht kleiner als eine Summe aus der ersten Anzahl (Z1) und einer ersten Dateneinheitsanzahl (239) der ersten Antwortnachricht (219) ist, wobei die erste Dateneinheitsanzahl (239) einer Anzahl von Dateneinheiten (245) der ersten Antwortnachricht (219) entspricht.

5. Verfahren (100) nach einem der voranstehenden Ansprüche, wobei die erste Anzahl (Z1) in der ersten Anschalteinheit (211) definiert ist, und wobei die zweite Anzahl (Z2) in der zweiten Anschalteinheit (213) definiert ist.

6. Verfahren (100) nach einem der voranstehenden Ansprüche, wobei die Schreibaufforderung (217) ferner eine Datenpaketlänge (229) des Datenpakets (227) definiert, und wobei die Datenpaketlänge (229) des Datenpakets (227) wenigstens eine Summe einer ersten Dateneinheitsanzahl (239) der erste Antwortnachricht (219) und einer zweiten Dateneinheitsanzahl (241) der zweiten Antwortnachricht (221) umfasst, wobei die zweite Dateneinheitsanzahl (241) einer Anzahl von Dateneinheiten (245) der zweiten Antwortnachricht (221) entspricht.

7. Verfahren (100) nach einem der voranstehenden Ansprüche, wobei der aktive Teilnehmer (201), der erste passive Teilnehmer (203) und der zweite passive Teilnehmer (205) jeweils ausschließlich zum Aussenden von Dateneinheiten (245) von einem Empfangsmodus in einen Sendemodus übergehen, wobei ausgesendete Dateneinheiten (245) mit einem Startbit, einem Stoppbit und einem Paritätsbit ausgebildet sind, wobei das Startbit einer Dateneinheit (245) den Beginn und das Stoppbit einer Dateneinheit (245) den Schluss der jeweiligen Dateneinheit (245) darstellen, und wobei das Bussystem (209) zwischen dem Aussenden von Dateneinheiten (245) auf einem hohen Spannungsniveau betrieben wird.

8. Verfahren (100) nach einem der voranstehenden Ansprüche, wobei das Bussystem (209) als ein Party-Line-Bussystem ausgebildet ist, und wobei ausgesendete Dateneinheiten (245) zeitgleich allen Teilnehmern des Bussystems (209) bereitstehen.

9. Verfahren (100) nach einem der voranstehenden Ansprüche, wobei die erste Antwortnachricht (219) Nutzdaten des ersten passiven Teilnehmers (203) und die zweite Antwortnachricht (221) Nutzdaten des zweiten passiven Teilnehmers (205) umfassen.

10. Verfahren (100) nach einem der voranstehenden Ansprüche, wobei der erste passive Teilnehmer (203) und der zweite Teilnehmer (205) jeweils als ein Aktor oder Sensor des Automatisierungssystems (200) ausgebildet sind, und wobei der aktive Teilnehmer (201) ein Busmaster des Bussystems (209) ist.

## Claims

1. Method (100) for communicating data between participants of an automation system (200) having an active participant (201) and at least two passive participants (208) comprising at least a first passive participant (203) and a second passive participant (205), wherein the active participant (201) and the passive participants (208) are connected to one another via a bus system (209), wherein the active participant (201) is configured to initiate data communication by transmitting communication requests, and wherein the passive participants (208) are configured to transmit corresponding response messages in response to the communication requests, wherein the first passive participant (203) comprises a first connection unit (211) for determining a first transmission time (T1) for the transmission of a first response message (219) by the first passive participant (203), and wherein the second passive participant (205) comprises a second connection unit (213) for determining a second transmission time (T2) for the transmission of a second response message (221) by the second participant (205), comprising:
receiving a write request (217), which is transmitted by the active participant (201), for the transmission of response messages by the first passive participant (203) and the second passive participant (205) in a first receiving step (103); **characterized by**:
counting data units (245) received after receiving the write request (217) by the first passive participant (203), until a first number (Z1) is reached, by means of the first connection unit (211) in a first counting step (135), and determining the first transmission time (T1) for the transmission of the first response message (219) by means of the first connection unit (211) of the first passive participant (203) in a first determination step (105), wherein the first transmission time (T1) corresponds to a time at which a number of data units (245) received by the first passive participant (203) according to a permanently defined data transmission rate after receiving the write request (217) is equal to the first number (Z1);
transmitting the first response message (219) at the first transmission time (T1) by means of the first passive participant (203) in a first response step (107) ;
receiving the first response message (219) by means of the active participant (201) and the second passive participant (205) in a second receiving step (109) ;
counting data units (245) received after receiving the write request (217) by the second passive participant (205), until a second number (Z2) is reached, by means of the second connection unit (213) in a second counting step (137), and determining the second transmission time (T2) for the transmission of the second response message (221) by means of the second connection unit (213) in a second determination step (111), wherein the second transmission time (T2) corresponds to a time at which a number of data units (245) received by the second passive participant (205) according to the permanently defined data transmission rate after receiving the write request (217) is equal to the second number (Z2);
transmitting the second response message (221) at the second transmission time (T2) by means of the second passive participant (205) in a second response step (113);
receiving the second response message (221) by means of the active participant (201) and the first passive participant (203) in a third receiving step (115); and
interpreting the first response message (219) and the second response message (221) as a first data segment (231) and a second data segment (233) of a data packet (227) by means of the active participant (201) in an interpretation step (117).

2. Method (100) according to Claim 1, also comprising:
determining a first checksum by means of the first passive participant (203) in a first checksum determination step (119), wherein the first checksum is created using the write request transmitted by the active participant (201), the first response message (219) transmitted by the first passive participant (203) and the second response message (221) received by the first passive participant (203); and/or
determining a second checksum by means of the second passive participant (205) in a second checksum determination step (121), wherein the second checksum is created using the write request transmitted by the active participant (201), the first response message (219) received by the second passive participant (205) and the second response message (221) transmitted by the second passive participant (205);
determining a third checksum by means of the active participant (201) in a third checksum determination step (123), wherein the third checksum is created using the write request transmitted by the active participant, the first response message (219) received by the active participant (201) and the second response message (221) received by the active participant (201);
transmitting the third checksum to the first passive participant (203) and the second passive participant (205) by means of the active participant (201) in a checksum transmission step (125);
checking the third checksum for correspondence with the first checksum by means of the first passive participant (203) in a first checksum checking step (127); and/or
checking the third checksum for correspondence with the second checksum by means of the second passive participant (205) in a second checksum checking step (129); and
if the third checksum does not correspond to the first checksum and/or to the second checksum:
transmitting an error message (225) by means of the first passive participant (203) and/or the second passive participant (205) in an error message transmission step (131), and
rejecting the first response message (219) and/or the second response message (221) and/or the data packet (227) by means of the active participant (201) and/or the first passive participant (203) and/or the second passive participant (205) in a rejection step (133).

3. Method (100) according to Claim 2, also comprising: if the third checksum corresponds to the first checksum and to the second checksum, interpreting the third checksum as a checking segment (237) of the data packet in the interpretation step (117).

4. Method (100) according to one of the preceding claims, wherein the first number (Z1) is any desired numerical value, and wherein the second number (Z2) is not less than a sum of the first number (Z1) and a first number of data units (239) of the first response message (219), wherein the first number of data units (239) corresponds to a number of data units (245) of the first response message (219).

5. Method (100) according to one of the preceding claims, wherein the first number (Z1) is defined in the first connection unit (211), and wherein the second number (Z2) is defined in the second connection unit (213) .

6. Method (100) according to one of the preceding claims, wherein the write request (217) also defines a data packet length (229) of the data packet (227), and wherein the data packet length (229) of the data packet (227) comprises at least a sum of a first number of data units (239) of the first response message (219) and a second number of data units (241) of the second response message (221), wherein the second number of data units (241) corresponds to a number of data units (245) of the second response message (221) .

7. Method (100) according to one of the preceding claims, wherein the active participant (201), the first passive participant (203) and the second passive participant (205) each change from a receiving mode to a transmitting mode solely for the purpose of transmitting data units (245), wherein transmitted data units (245) are formed with a start bit, a stop bit and a parity bit, wherein the start bit of a data unit (245) represents the beginning of the respective data unit (245) and the stop bit of a data unit (245) represents the end of the respective data unit (245), and wherein the bus system (209) is operated at a high voltage level between the transmission of data units (245).

8. Method (100) according to one of the preceding claims, wherein the bus system (209) is in the form of a party-line bus system, and wherein transmitted data units (245) are available to all participants of the bus system (209) at the same time.

9. Method (100) according to one of the preceding claims, wherein the first response message (219) comprises useful data relating to the first passive participant (203) and the second response message (221) comprises useful data relating to the second passive participant (205).

10. Method (100) according to one of the preceding claims, wherein the first passive participant (203) and the second participant (205) are each in the form of an actuator or a sensor of the automation system (200), and wherein the active participant (201) is a bus master of the bus system (209).

## Revendications

1. Procédé (100) de communication de données entre des périphériques d'un système d'automatisation (200) comprenant un périphérique actif (201) et au moins deux périphériques passifs (208), lesquels comprennent au moins un premier périphérique passif (203) et un deuxième périphérique passif (205), le périphérique actif (201) et les périphériques passifs (208) étant connectés entre eux par le biais d'un système de bus (209), le périphérique actif (201) étant conçu pour initier une communication de données avec l'émission de demandes de communication et les périphériques passifs (208) étant conçus pour, en réaction aux demandes de communication, émettre des messages de réponse correspondants, le premier périphérique passif (203) comportant une première unité de connexion (211) destinée à déterminer un premier instant d'émission (T1) pour émettre un premier message de réponse (219) par le premier périphérique passif (203), et le deuxième périphérique passif (205) comportant une deuxième unité de connexion (213) destinée à déterminer un deuxième instant d'émission (T2) pour émettre un deuxième message de réponse (221) par le deuxième périphérique (205), comprenant :
réception d'une demande d'écriture (217) émise par le périphérique actif (201) pour émettre des messages de réponse par le premier périphérique passif (203) et le deuxième périphérique passif (205) dans une première étape de réception (103) ; **caractérisé par** :
décompte des unités de données (245) reçues après la réception de la demande d'écriture (217) par le premier périphérique passif (203) jusqu'à atteindre un premier nombre (Z1) par la première unité de connexion (211) dans une première étape de décompte (135) et détermination du premier instant d'émission (T1) pour émettre le premier message de réponse (219) par la première unité de connexion (211) du premier périphérique passif (203) dans une première étape de détermination (105), le premier instant d'émission (T1) correspondant à un instant auquel un nombre d'unités de données (245), reçues par le premier périphérique passif (203) conformément à un débit de transmission de données défini fixe après la réception de la demande d'écriture (217), est égal au premier nombre (Z1) ;
émission du premier message de réponse (219) au premier instant d'émission (T1) par le premier périphérique passif (203) dans une première étape de réponse (107) ;
réception du premier message de réponse (219) par le périphérique actif (201) et le deuxième périphérique passif (205) dans une deuxième étape de réception (109) ;
décompte des unités de données (245) reçues après la réception de la demande d'écriture (217) par le deuxième périphérique passif (205) jusqu'à atteindre un deuxième nombre (Z2) par la deuxième unité de connexion (213) dans une deuxième étape de décompte (137) et détermination du deuxième instant d'émission (T2) pour émettre le deuxième message de réponse (221) par la deuxième unité de connexion (213) dans une deuxième étape de détermination (111), le deuxième instant d'émission (T2) correspondant à un instant auquel un nombre d'unités de données (245), reçues par le deuxième périphérique passif (205) conformément au débit de transmission de données défini fixe après la réception de la demande d'écriture (217), est égal au deuxième nombre (Z2) ;
émission du deuxième message de réponse (221) au deuxième instant d'émission (T2) par le deuxième périphérique passif (205) dans une deuxième étape de réponse (113) ;
réception du deuxième message de réponse (221) par le périphérique actif (201) et le premier périphérique passif (203) dans une troisième étape de réception (115) ; et
interprétation du premier message de réponse (219) et du deuxième message de réponse (221) en tant qu'un premier segment de données (231) et un deuxième segment de données (233) d'un paquet de données (227) par le périphérique actif (201) dans une étape d'interprétation (117) .

2. Procédé (100) selon la revendication 1, comprenant en outre :
détermination d'une première somme de contrôle par le premier périphérique passif (203) dans une première étape de détermination de somme de contrôle (119), la première somme de contrôle étant créée par le biais de la demande d'écriture émise par le périphérique actif (201), le premier message de réponse (219) émis par le premier périphérique passif (203) et le deuxième message de réponse (221) reçu par le premier périphérique passif (203) ; et/ou
détermination d'une deuxième somme de contrôle par le deuxième périphérique passif (205) dans une deuxième étape de détermination de somme de contrôle (121), la deuxième somme de contrôle étant créée par le biais de la demande d'écriture émise par le périphérique actif (201), le premier message de réponse (219) reçu par le deuxième périphérique passif (205) et le deuxième message de réponse (221) émis par le deuxième périphérique passif (205) ;
détermination d'une troisième somme de contrôle par le périphérique actif (201) dans une troisième étape de détermination de somme de contrôle (123), la troisième somme de contrôle étant créée par le biais de la demande d'écriture émise par le périphérique actif (201), le premier message de réponse (219) reçu par le périphérique actif (201) et le deuxième message de réponse (221) reçu par le périphérique actif (201) ;
émission de la troisième somme de contrôle par le périphérique actif (201) au premier périphérique passif (203) et au deuxième périphérique passif (205) dans une étape d'émission de somme de contrôle (125) ;
contrôle de la troisième somme de contrôle afin de vérifier si elle coïncide avec la première somme de contrôle par le premier périphérique passif (203) dans une première étape de vérification de somme de contrôle (127) ; et/ou
contrôle de la troisième somme de contrôle afin de vérifier si elle coïncide avec la deuxième somme de contrôle par le deuxième périphérique passif (205) dans une deuxième étape de vérification de somme de contrôle (129) ; et
dans le cas où la troisième somme de contrôle ne coïncide pas avec la première somme de contrôle et/ou la deuxième somme de contrôle : émission d'un message d'erreur (225) par le premier périphérique passif (203) et/ou le deuxième périphérique passif (205) dans une étape d'émission de message d'erreur (131), et
rejet du premier message de réponse (219) et/ou du deuxième message de réponse (221) et/ou du paquet de données (227) par le périphérique actif (201) et/ou le premier périphérique passif (203) et/ou le deuxième périphérique passif (205) dans une étape de rejet (133).

3. Procédé (100) selon la revendication 2, comprenant en outre : dans le cas où la troisième somme de contrôle coïncide avec la première somme de contrôle et la deuxième somme de contrôle, interprétation de la troisième somme de contrôle en tant que segment de contrôle (237) du paquet de données dans une étape d'interprétation (117).

4. Procédé (100) selon l'une des revendications précédentes, le premier nombre (Z1) étant une valeur numérique quelconque, et le deuxième nombre (Z2) n'étant pas inférieur à une somme du premier nombre (Z1) et d'un premier nombre d'unités de données (239) du premier message de réponse (219), le premier nombre d'unités de données (239) correspondant à un nombre d'unités de données (245) du premier message de réponse (219).

5. Procédé (100) selon l'une des revendications précédentes, le premier nombre (Z1) étant défini dans la première unité de connexion (211), et le deuxième nombre (Z2) étant défini dans la deuxième unité de connexion (213) .

6. Procédé (100) selon l'une des revendications précédentes, la demande d'écriture (217) définissant en outre une longueur de paquet de données (229) du paquet de données (227), et la longueur de paquet de données (229) du paquet de données (227) comprenant au moins une somme d'un premier nombre d'unités de données (239) du premier message de réponse (219) et d'un deuxième nombre d'unités de données (241) du deuxième message de réponse (221), le deuxième nombre d'unités de données (241) correspondant à un nombre d'unités de données (245) du deuxième message de réponse (221).

7. Procédé (100) selon l'une des revendications précédentes, le périphérique actif (201), le premier périphérique passif (203) et le deuxième périphérique passif (205) passant respectivement exclusivement pour l'émission d'unités de données (245) d'un mode de réception à un mode d'émission, les unités de données (245) sortantes étant formées avec un bit de début, un bit d'arrêt et un bit de parité, le bit de début d'une unité de données (245) représentant le début et le bit d'arrêt d'une unité de données (245) représentant la fin de l'unité de données (245) respective, et le système de bus (209) fonctionnant à un niveau de tension élevé entre les émissions d'unités de données (245).

8. Procédé (100) selon l'une des revendications précédentes, le système de bus (209) étant réalisé sous la forme d'un système de bus à ligne d'abonné, et les unités de données (245) émises étant mises à disposition simultanément à tous les périphériques du système de bus (209) .

9. Procédé (100) selon l'une des revendications précédentes, le premier message de réponse (219) comprenant des données utiles du premier périphérique passif (203) et le deuxième message de réponse (221) des données utiles du deuxième périphérique passif (205).

10. Procédé (100) selon l'une des revendications précédentes, le premier périphérique passif (203) et le deuxième périphérique (205) étant respectivement réalisés sous la forme d'un actionneur ou d'un capteur du système d'automatisation (200), et le périphérique actif (201) étant un maître de bus du système de bus (209) .
